Europäisches Patentamt

European Patent Office

Office européen des brevets

(19)

(11) **EP 1 158 801 A2**

(12) # EUROPEAN PATENT APPLICATION

(43) Date of publication:
**28.11.2001 Bulletin 2001/48**

(51) Int Cl.⁷: **H04N 7/14**, H04N 7/26

(21) Application number: **01111989.8**

(22) Date of filing: **22.05.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.05.2000 JP 2000150208
22.05.2000 JP 2000150209**

(71) Applicant: **MATSUSHITA ELECTRIC INDUSTRIAL
CO., LTD.
Kadoma-shi, Osaka-fu (JP)**

(72) Inventors:
• **Imagawa, Kazuyuki
Fukuoka-shi, Fukuoka-ken (JP)**
• **Matsuo, Hideaki
Fukuoka-shi, Fukuoka-ken (JP)**

• **Takata, Yuji
Fukuoka-shi, Fukuoka-ken (JP)**
• **Yoshizawa, Masafumi
Chikoshino-shi, Fukuoka-ken (JP)**
• **Hamasaki, Shogo
Kasuya-gun, Fukuoka-ken (JP)**
• **Yoshimura, Tetsuya
Fukuoka-shi, Fukuoka-ken (JP)**
• **Iwasa, Katsuhiro
Iizuka-shi, Fukuoka-ken (JP)**

(74) Representative: **Lang, Johannes, Dipl.-Ing. et al
Bardehle Pagenberg Dost Altenburg Geissler
Isenbruck,
Postfach 86 06 20
81633 München (DE)**

(54) **Image communication terminal**

(57)     An image communication terminal comprises a face extraction part (7) for extracting the position and the size of a face with respect to an image picked up by a camera part (4), a display part (3) for displaying the image toward a user, a communication part (9) for establishing two-way communication of the image to and from an information processor on the side of the other party, and a transmitting data processing part (8) for outputting to the communication part (9) an image in a rectangular transmission region set so as to be movable in the image picked up by the camera part (4), an effective region which moves integrally with the transmission region being set in the image picked up by the camera part (4), to move the position of the transmission region in conformity with the position of the face region, provided that the face region deviates from the effective region.

Consequently, the camera part follows the position of the user without using a large-scale follow-up mechanism, thereby making it possible to photograph the user at a good position.

F I G.  1

EP 1 158 801 A2

**Description**

BACKGROUND OF THE INVENTION

Field of the Invention

The present invention relates to image communication terminals, and more particularly, to an image communication terminal for a user photographing himself or herself or another person near the user and carrying on a dialogue with the other party while transmitting an image picked up thereto.

Description of the Background Art

As is well known, there are various forms such as a television telephone set, a television conference system, and a video mail as an image communication terminal for carrying on a dialogue with the other party while transmitting an image thereto. In any form, in order for a user to transmit an image of his or her own or an image of another person near the user (hereinafter simply referred to as a "user") to the other party, a camera part contained in or externally connected to the image communication terminal and the user to be a subject must be always in a suitable positional relationship.

In order to maintain the suitable positional relationship, a method of providing the camera part with a mechanism for moving an optical axis, a zoom mechanism, or the like and causing the camera part to follow the movement of the user has been considered. In this method, however, the camera part and a related mechanism which are required for a follow-up operation are made large-scale, thereby making it impossible to miniaturize and provide at low cost the image communication terminal. Particularly, it is not realistic to provide such a mechanism in an image communication terminal such as a mobile terminal or a portable (television) telephone set whose portability is important.

On the other hand, also considered a method of providing information related to the position of the user relative to the camera part from the image communication terminal to the user to maintain the suitable positional relationship in such a manner that the user himself or herself is matched with the camera part.

Specifically, as a first method, a part of a screen has been conventionally utilized to display an image of his or her own (an image of a user himself or herself) by a picture-in-picture system or a screen division system. In this method, however, a significant part of the screen is occupied in order to display the image of his or her own. As a result, an image of the other party is decreased and in size is difficult to see.

As a second method, an image of his or her own and an image of the other party have been conventionally displayed while being switched. In this method, however, a screen is often switched. Accordingly, the user does not easily concentrate on a conversation, anxious about the switching.

Additionally, even by either the first method or the second method, circumstances of the conversation are too different from circumstances of a normal conversation (a familiar conversation between the user and the other party). Accordingly, the user is forced to have an unnatural feeling.

In order to cope with such a problem, therefore, Japanese Patent Laid-Open Publication No. 8-251561 (96-251561) discloses a technique preventing an image of a user himself or herself from being displayed and capable of omitting a follow-up mechanism in a camera part. In this technique, the user himself or herself is photographed by the camera part, to detect the position of the user and judge whether or not the detected position deviates from a photographing range. Only when the detected position deviates from the photographing range, the user is notified of the fact by either one of the following methods:

   (1) An image of the other party is displayed on approximately the whole of a screen, and an image of the other party is changed (for example, the image of the other party is deformed) when the position deviates from the photographing range, to notify the user of the fact.
   (2) Not only a region where the image of the other party is displayed but also a character display region is ensured in the screen. When the position deviates from the photographing range, a message indicating that the position deviates from the range is displayed on the character display region, to notify the user of the fact.

In either one of the methods (1) and (2), however, the user is notified of nothing unless the position of the user deviates from the photographing range. When the user makes commonsense use, the position does not so frequently deviate from the photographing range. Consequently, the user cannot confirm his or her own position relative to the photographing range in most cases (i.e., a case where the position does not deviate from the photographing range).

Furthermore, in the above-mentioned method (1), the image of the other party is suddenly changed when the position deviates from the photographing range. Accordingly, the user interrupts the conversation, surprised. Further, in the above-mentioned method (2), a certain extent of character display region is required in order that characters (a message) to be displayed are kept in shape. Therefore, the image display region is decreased upon being pressed by the character display region. Accordingly, the image of the other party is small and is difficult to see.

Additionally, even in either the method (1) or the method (2), the size of the user on the screen is not entirely concerned with, and it is unclear whether the user is proper in a far-and-near direction from the camera part.

SUMMARY OF THE INVENTION

Therefore, an object of the present invention is to provide an image communication terminal capable of photographing a user at a good position because a camera part follows the position of the user without using a large-scale follow-up mechanism.

Another object of the present invention is to provide an image communication terminal capable of a user always confirming display (a photographing position) of an image of his or her own while ensuring a natural conversation in which the other party is easy to see.

The present invention has the following features to attain the objects above.

A first aspect of the present invention is directed to an image communication terminal for transmitting an image of a user photographed by a camera part to the other party, characterized by comprising:

an input part accepting input from a user;
a camera part for photographing the user;
a face extraction part for extracting the position and the size of the face (hereinafter referred to as a face region) of the user from an image picked up by the camera part;
a display part for displaying the image toward the user ;
a communication part for communicating at least the image with an information processor on the side of the other party; and
a transmitting data processing part for outputting to the communication part an image in a rectangular transmission region smaller than a region including the image picked up by the camera part and set so as to be movable in the region including the image,
an effective region which moves integrally with the transmission region being set in the region including the image picked up by the camera part,
the transmitting data processing part moving, when the extracted face region deviates from the effective region, the position where the transmission region is set in conformity with the position of the face region.

In the first aspect, it is thus judged whether or not the face region does not deviate from the effective region. When the face region deviates from the effective region, the position of the transmission region is moved in conformity with the position of the face region. Consequently, the transmission region follows the movement of the face region. Even if the user is not anxious how himself or herself is displayed, an image of his or her own suitably framed is transmitted to the other party only by existing at an approximate position. Moreover, the necessity of a large-scale follow-up mechanism such as an optical axis moving part or a zoom part in the camera part is eliminated, not to degrading the portability of the image communication terminal. Further, if the face region is within the effective region, the transmission region is not moved. Accordingly, the image transmitted to the other party and particularly, a background image of the user is not frequently blurred, thereby making it possible to prevent the other party from getting sick.

Preferably, the effective region is smaller than the transmission region and is set in the transmission region.

As a result, the face region always deviates from the effective region before deviating from the transmission region, thereby making it possible to avoid such circumstances that the face region juts out of the transmission region so that a part of the face is chipped.

Preferably, when the extracted face region deviates from the effective region, the transmitting data processing part moves the transmission region such that the face region is positioned at the center of the transmission region, or moves the transmission region such that the face region is positioned at or above the center of the transmission region. In addition, it is preferable that the movement of the transmission region may be made switchable depending on transmission mode information inputted from the input part.

Consequently, it is possible to select preferable framing such as face-up or bust-up depending on the taste of the user.

Furthermore, the display part monitor-displays the image in the transmission region and the face region in response to the information inputted from the input part, and the user can adjust the movement of the transmission region vertically and horizontally while referring to the monitor display.

The user can thus transmit an image of his or her own to the other party in an arbitrary framing by monitoring the image in the transmission region and the face region and suitably adjusting the position of the transmission region.

A second aspect of the present invention is directed to an image communication terminal for transmitting an image of a user photographed by a camera part to the other party, comprising:

an input part accepting input from a user;
a camera part for photographing the user;
a face extraction part for extracting the position and the size of the face (hereinafter referred to as a face region) of the user from an image picked up by the camera part;
a display part for displaying the image toward the user;
a communication part for communicating at least the image to an information processor on the side of the other party; and
a transmitting data processing part for outputting to the communication part an image in a rectangular transmission region smaller than a region including the image picked up by the camera part and set so as to be movable in the region including the image,
an effective region which moves integrally with the transmission region being set in the region including the image picked up by the camera part,
the transmitting data processing part moving, when the extracted face region deviates from the effective region, the position where the transmission region is set in conformity with the position of the face region, and correcting the luminance of the image in the transmission region and outputting the image to the communication part such that the visibility of the face in the image picked up by the camera part is improved on the basis of the luminance of the image in the extracted face region.

A third aspect of the present invention is directed to an image communication terminal for transmitting an image of a user photographed by a camera part to the other party, comprising:

an input part accepting input from a user;
a camera part for photographing the user;
a face extraction part for extracting the position and the size of the face (hereinafter referred to as a face region) of the user from an image picked up by the camera part;
a display part for displaying the image toward the user;
a communication part for communicating at least the image to an information processor on the side of the other party; and
a transmitting data processing part for outputting to the communication part an image in a rectangular transmission region smaller than a region including the image picked up by the camera part and set so as to be movable in the region including the image,
an effective region which moves integrally with the transmission region being set in the region including the image picked up by the camera part,
the transmitting data processing part moving, when the extracted face region deviates from the effective region, the position where the transmission region is set in conformity with the position of the face region, and setting the value of the exposure level of the camera part such that the visibility of the face in the image picked up by the camera part is improved on the basis of the luminance of the image in the extracted face region.

In the second and third aspects, it is thus judged whether or not the face region does not deviate from the effective region. When the face region deviates from the effective region, the position of the transmission region is moved in conformity with the position of the face region. Consequently, the transmission region follows the movement of the face region. Even if the user is not anxious how himself or herself is displayed, an image of his or her own suitably framed is transmitted to the other party only by existing at an approximate position. Moreover, the necessity of a large-scale follow-up mechanism such as an optical axis movement part or a zoom part in the camera part is eliminated, not degrading the portability of the image communication terminal. Further, if the face region is within the effective region, the transmission region is not moved. Accordingly, the image transmitted to the other party and particularly, a background image of the user is not frequently blurred, thereby making it possible to prevent the other party from getting sick. Further, even in the case of backlight, it is possible to transmit to the other party such an image that the face of the user is always seen. Consequently, it is possible to carry on a dialog with the other party using the image communication terminal without being anxious about a surrounding illumination environment even outdoors.

A fourth aspect of the present invention is directed to an image communication terminal for transmitting an image of a user photographed by a camera part to the other party, comprising:

a camera part for photographing the user;
a face extraction part for extracting the position of the face of the user from an image picked up by the camera part;

a display part for displaying the image received from the other party toward the user;

a notification control part for notifying the user of the position of the face of the user in the image picked up by the camera part on the basis of the extracted position of the face; and

a communication part for communicating at least the image to an information processor on the side of the other party.

In the fourth aspect, the user is thus notified of his or her own position in the image picked up. Even when an image of his or her own does not deviate from a screen, therefore, a conversation with the other party can be continued without anxiety while confirming his or her position. If the user deviates from the screen, the image of the other party is not suddenly changed. Accordingly, the user can return to a correct position to continue the conversation while calmly referring to the notification. Moreover, the necessity of providing a follow-up mechanism for following the user in the camera part is eliminated, thereby making it possible to make the image communication terminal lightweight and low in power consumption. Therefore, the image communication terminal can be suitably used for equipment, whose portability is thought important, such as a portable (television) telephone set or a mobile terminal.

Preferably, the face extraction part also extracts the size of the face of the user together with the position of the face, and the notification control part notifies the user of the position and the size of the face of the user in the image picked up by the camera part.

Thus, the size of the face region is extracted, and the user is notified of the size. Accordingly, the user can obtain information related to both the position and the size of the face region. Consequently, the user can properly hold a position on the screen and a position in a far-and-near direction while referring to the information. Further, the user can confirm in which position on the screen and in which size himself or herself is displayed without obtaining the image of his or her own.

It is preferable that the notification control part displays on the display part a mark indicating only the extracted position of the face or the position and the size of the face.

Consequently, the user can concentrically carry on a conversation similarly to a normal conversation while seeing the image of the other party displayed on the display part. Further, the user can confirm his or her own position while referring to a simple mark.

The mark may be displayed on an image received from the other party, or outside the image received from the other party.

In the former case, the mark appears on the image of the other party. Accordingly, a wide region need not be ensured on the screen for only the mark, thereby making it possible to make the image of the other party larger and easier to see. Moreover, the user need not change a line of sight in order to see the mark. Accordingly, the user is hardly tired even if he or she carries on a conversation for a long time. In the latter case, the mark is separated from the image of the other party. Accordingly, the mark does not interfere with the image of the other party, thereby making it possible to see the image of the other party more clearly.

The notification control part may notify the user of the extracted position of the face through a position notification part provided separately from the display part.

The position notification part is thus provided separately from the display part. Accordingly, the whole screen of the display part can be assigned to the display of the image of the other party, thereby making it possible to make the image of the other party wider and easier to see.

Furthermore, a method of notifying the user, which is carried out by the notification control part, is made switchable in accordance with an instruction from the user. Accordingly, the user can select a preferable notifying method.

The preferable face extraction part applied to the first to fourth aspects comprises:

an edge extraction part for extracting an edge part (pixels outlining the human body and face) from the image picked up by the camera part, and generating an image having only the edge part (hereinafter referred to as an edge image);

a template storage part for storing a template having a plurality of predetermined concentric shapes, which are similar but different in size, provided at its center point;

a voting result storage part for storing the position of coordinates and voting values on the edge image in a one-to-one correspondence for each of the shapes composing the template;

a voting part for sequentially moving the center point of the template to the positions of the pixels in the edge part and increasing or decreasing, for each of the positions of the pixels to which the center point of the template has been moved, the voting value stored in the voting result storage part with respect to each of the positions of coordinates corresponding to the positions of all the pixels forming the shape; and

an analysis part for finding the position and the size of the face included in the target image on the basis of each of the voting values stored in the voting result storage part.

By this configuration, the position of the face can be detected at high speed only by voting processing (basically, only addition) whose load is light and its evaluation. Moreover, the template comprising a plurality of concentric shapes which are similar is used. Accordingly, a substantial approximation is made as to which of the shapes is approximately equal to the edge part which will include the face, thereby making it possible to extract the size of the face at high speed. The processing load can be thus significantly reduced. Accordingly, the face can be extracted in approximately real time even by the processing capability at the current level of the personal computer. Further, a portion where the face region exists, the number of face regions, and so forth in the target image may be unclear before the extraction. The face can be uniformly detected with respect to the target image in the wide range, so that the versatility is significantly high.

If it is assumed that a predetermined shape is a circle, the distance from the center point of the template to all the pixels forming the shape is always constant, thereby making it possible to keep the accuracy of the results of the voting high.

Furthermore, the other preferable face extraction part comprises:

a template image processing part receiving a predetermined template image for finding an edge normal vector of the image, generating an evaluation vector from the edge normal vector, and orthogonally transforming the evaluation vector;

an input image processing part receiving the image picked up by the camera part for finding an edge normal vector of the image, generating an evaluation value from the edge normal vector, and orthogonally transforming the evaluation vector;

a sum-of-products part for calculating, with respect to the respective evaluation vectors after the orthogonal transformation which are generated with respect to the template image and the image picked up, the product of corresponding spectral data and calculating the sum of the calculated products; and

an inverse orthogonal transformation part for subjecting the results of the calculation to inverse orthogonal transformation, to produce a map of a similar value, and

the evaluation vectors including components obtained by transforming the edge normal vectors of the corresponding images using an even multiple of an angle between the vectors, all an expression for calculating the similar value, the orthogonal transformation, and the inverse orthogonal transformation having linearity.

By this configuration, even when the positive or negative sign of the inner product ($\cos\theta$) of an angle $\theta$ between the edge normal vector of the template image and the edge normal vector of the image picked up by the camera part (the input image) is reversed by the variation in the luminance in the background portion, the similar value is not affected, thereby making it possible to properly evaluate matching.

More preferably, a value calculated on the basis of the angle in a case where the edge normal vectors are represented by polar coordinates is used in the representation of the evaluation vectors.

In each of the face extraction parts, it is preferable that the face extraction part further comprises a face/non-face judgment part for judging whether or not the position and the size which are extracted as the face from the image picked up by the camera part are really a face (on the basis of contents stored in the voting result storage part or the similar value generated in the inverse orthogonal transformation part), and outputs the results of the extraction only when it is judged that they are a face.

Even when the actual face is other than a first candidate for the face region, the face region can be stably extracted by the judgment. Further, even when there is no face in the image, it can be judged that there is no face. Accordingly, it is possible to automatically detect a case where the position of the face need not be moved and displayed.

The face/non-face judgment part may make face/non-face judgment on the basis of the results of judgment of a support vector function using image features obtained from a region extracted as the face from the image picked up by the camera part. In this case, the edge normal vector obtained from the region extracted as the face from the image picked up by the camera part may be taken as the image features, or an edge normal histogram obtained from the region may be taken as the image features.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram showing the configuration of an image communication terminal according to a first embodiment of the present invention;

FIG. 2 is a flow chart showing the procedure for follow-up processing performed by a transmitting data processing part 8;

FIGS. 3 to 6 are diagrams for explaining the relationship between a photographing region 30 and a transmission region 31;

FIG. 7 is a block diagram showing the configuration of an image communication terminal according to a second embodiment of the present invention;

FIGS. 8 and 9 are diagrams showing examples of a mark displayed on a screen of a display part 3;

FIG. 10 is a diagram showing an example of a mark of which a user is notified using ten-keys in an input part 22;

FIG. 11 is a diagram showing an example of an image on the side of a user 1, which is displayed on a screen of an information processor on the side of the other party;

FIG. 12 is a block diagram showing the configuration of a face extraction part 7 in an example 1;

FIG. 13 is a diagram showing an example of a template stored in a template storage part 52;

FIG. 14 is a flow chart showing the procedure for voting processing performed by a voting part 54;

FIG. 15 is a diagram for explaining an example of an edge image extracted by an edge extraction part 51;

FIG. 16 is a diagram for explaining the concept of voting values, through voting processing, stored in voting storage regions in a voting result storage part 53;

FIG. 17 is a flow chart showing the procedure for analysis processing performed by an analysis part 55;

FIG. 18 is a block diagram showing the configuration of a face extraction part 7 in an example 2;

FIG. 19 is a diagram showing an example of a template image and a target image which are inputted to edge extraction parts 81 and 91 ;

FIG. 20 is a diagram for explaining positive-negative inversion of the inner product;

FIG. 21 is a diagram for explaining compression processing of an evaluation vector;

FIG. 22 is a block diagram showing a part of the configuration of a face extraction part 7 in an example 3; and

FIG. 23 is a diagram showing an example of the results of face/non-face judgment made in a face/non-face judgment part 113.

DESCRIPTION OF THE PREFERRED EMBODIMENTS

Referring now to the drawings, embodiments of the present invention will be described.

(First Embodiment)

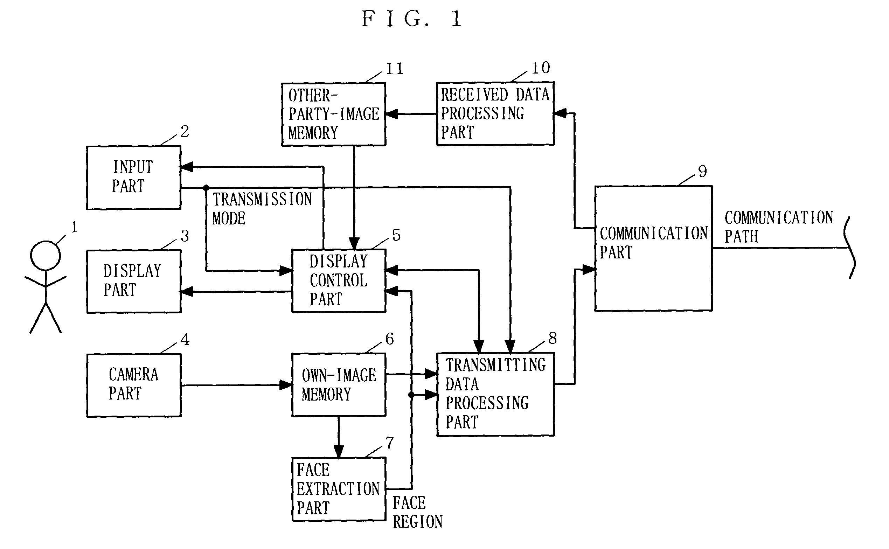

FIG. 1 is a block diagram showing the configuration of an image communication terminal according to a first embodiment of the present invention. In FIG. 1, the image communication terminal according to the first embodiment comprises an input part 2, a display part 3, a camera part 4, a display control part 5, an own-image memory 6, a face extraction part 7, a transmitting data processing part 8, a communication part 9, a received data processing part 10, and an other-party-image memory 11.

The outline of each of the parts constituting the image communication terminal according to the first embodiment will be first described.

As shown in FIG. 1, in the image communication terminal according to the present embodiment, the input part 2, the display part 3, and the camera part 4 face a user 1.

The input part 2 is composed of a keyboard (including ten-keys, etc.), a mouse, and so forth, and is utilized for the user 1 to enter a transmission mode and other necessary information.

The display part 3 is composed of an LCD (Liquid Crystal Display) or the like, and displays toward the user 1 an image of the other party, a mark conforming to an instruction from the display control part 5, and so forth on its screen. The mark is an index by which the user 1 can confirm the position and the size of his or her own face in the screen, as described in detail later.

The camera part 4 is composed of an optical system such as a lens and an electrical system such as a CCD (Charge Coupled Device), and is used for photographing the user 1. An image picked up by the camera part 4 (hereinafter referred to as a target image) is stored in the own-image memory 6 for each frame.

The display control part 5 controls display on the screen of the display part 3 (mainly, display of the received image of the other party). Further, the display control part 5 causes a mark based on a face region extracted by the face extraction part 7 to be displayed on the screen of the display part 3 in response to the information inputted from the input part 2.

The face extraction part 7 examines, with respect to the target image stored in the own-image memory 6, the position and the size of the face which exists, and outputs the information to the display control part 5 and the transmitting data processing part 8 as the face region. As for the face extraction part 7, a method which is applicable to the present invention will be described in detail later.

The transmitting data processing part 8 sets a transmission region in conformity with the position of the face region extracted by the face extraction part 7. The transmitting data processing part 8 feeds, out of image data representing the target images stored in the own-image memory 6, the image data in the transmission region to the communication part 9 in accordance with the transmission mode designated from the input part 2.

The communication part 9 communicates at least the image data to an information processor (including an image communication terminal) on the side of the other party through a communication path. The communication mode herein is arbitrary, which may be communication between slave units without passing through a master or the like, for example, an extension or synchronous communication or asynchronous communication passing through a master, for example, a television telephone set.

The received data processing part 10 processes the image data in the other party which has been received through the communication part 9, and stores the processed image data in the other-party-image memory 11 for each frame.

Although in the present embodiment, description was made of a case where the communication part 9 establishes two-way communication as an example, the present invention is also applicable to a video mail or the like for establishing one-way communication of the image data from the user 1 to the other party. In this case, the information processor on the side of the other party may have only a structure in which the transmitted image data is received and is displayed on its screen.

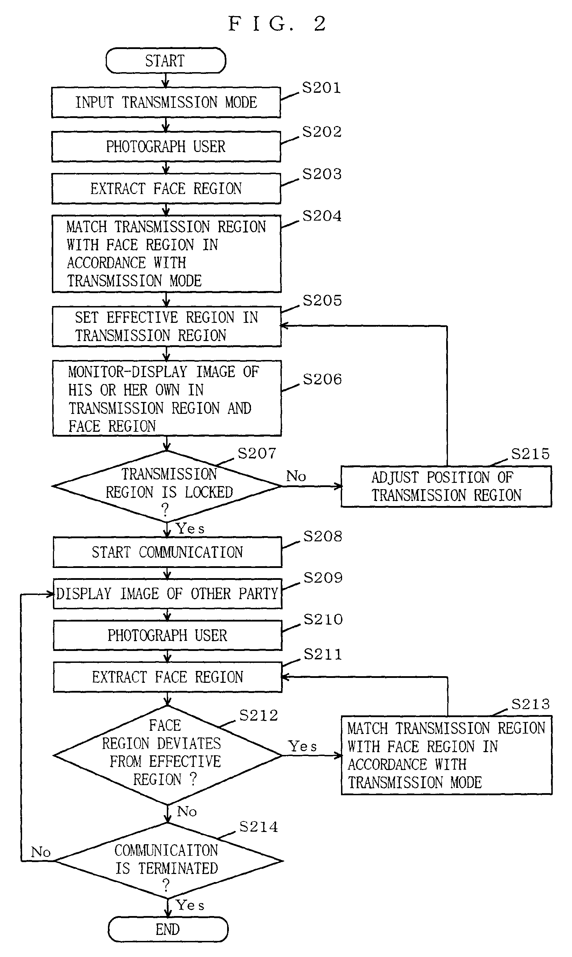

Follow-up processing, conforming to the position of the face region, performed by the transmitting data processing part 8 will be described using FIGS. 2 to 6.

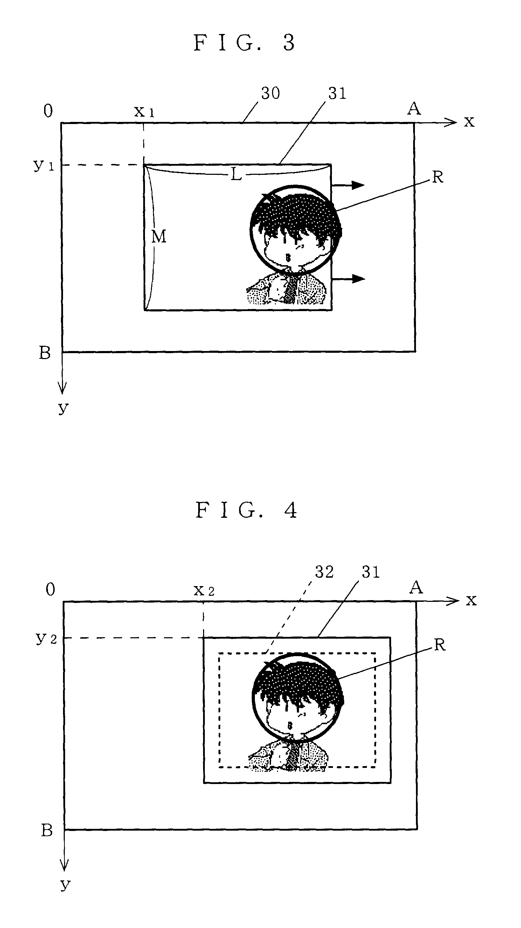

First, the relationship between a photographing region 30 by the camera part 4 and a transmission region 31 of the image transmitted from the communication part 9 is generally as shown in FIG. 3. The transmission region 31 is a smaller rectangular region than the photographing region 30. Although the camera part 4 photographs a subject (the user 1) in a wider photographing region than the transmission region 31, only the image in the transmission region 31 is transmitted to the other party from the image communication terminal. In an example shown in FIG. 3, the photographing region 30 has a length A in the x-direction and has a length B in the y-direction, and the transmission region 31 has a length L in the x-direction and has a length M in the y-direction. Further, $L < A$ and $M < B$. Each of the lengths A, B, L, and M is fixed.

In the example shown in FIG. 3, an upper left point $(x1, y1)$ of the transmission region 31 is taken as a reference point. The reference point is movable in the photographing region 30. The reference point is determined so that the position of the transmission region 31 is uniquely determined. A point other than the upper left point of the transmission region 31 may be taken as a reference point.

On the other hand, in the present embodiment, the position and the size of the face region extracted by the face extraction part 7 are represented by a circular mark R. The center of the mark R is the center of the face region, and the diameter of the mark R corresponds to the size of the face region. The mark R may be in a shape other than a circle.

In a state shown in FIG. 3, the face region indicated by the mark R deviates toward the right of the transmission region 31. If the transmission region 31 is moved rightward, as indicated by arrows, on the basis of the mark R, therefore, preferable framing is obtained. In the present embodiment, the transmission region 31 is moved such that the mark R is included therein.

FIG. 4 illustrates a state after moving the transmission region 31 (an upper left point $(x2, y2)$). In the present embodiment, an effective region 32 is further set inside the transmission region 31 so that the effective region 32 and the transmission region 31 are integrally moved, as shown in FIG. 4. It is checked whether or not the mark R deviates from not the transmission region 31 but the effective region 32. When the mark R deviates from the effective region 32, the transmission region 31 and the effective region 32 are moved, as shown in FIG. 3 to 4.

When the effective region 32 is narrowed, the probability that the mark R deviates from the effective region 32 is increased, thereby easily causing the other party to get sick. Consequently, it is desirable that the effective region 32 is made rather wide, to suppress the transmission region 31 not to be moved, as shown in FIG. 4. Even by this, the face region is also at a position easy to see.

Additionally, in the present embodiment, the position of the mark R immediately after moving the transmission region 31 is switched depending on a transmission mode (a bust-up mode or a face-up mode). FIG. 4 illustrates an example of a method of displaying an image in the bust-up mode where the mark R is positioned slightly above the center in the x-direction and the center in the y-direction of the transmission region 31. The face-up mode is a mode where the mark R is positioned at the center in the x-direction and the center in the y-direction of the transmission region 31.

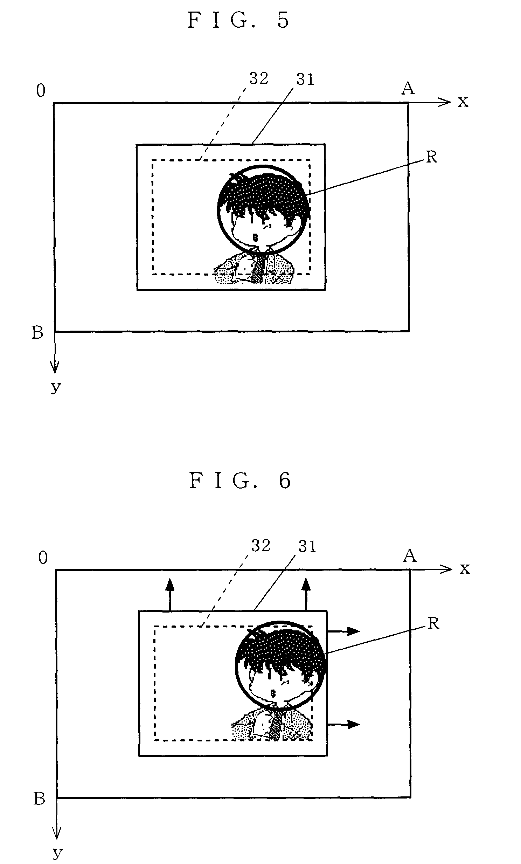

Furthermore, in the present embodiment, it is possible to offset the mark R in a preferable direction from the modes, as shown in FIG. 5. Consequently, the image communication terminal can cope with various requests, as in cases such as a case where the user 1 desires to show the other party his or her things together with himself or herself.

Referring now to FIG. 2, each of processes in the follow-up processing performed by the transmitting data processing part 8 will be described.

First, the user 1 enters the transmission mode (the bust-up mode/the face-up mode) from the input part 2 (step S201). The user 1 is then photographed by the camera part 4, and an image of the user 1 is stored as a target image in the own-image memory 6 (step S202). At the time of the photographing, the user 1 may be only at a position where his or her face is displayed in the wide photographing region 30. The face extraction part 7 then extracts the face region (the position and the size of the face) in the target image, and outputs the extracted face region to the transmitting data processing part 8 (step S203).

When the face region is extracted, the transmitting data processing part 8 matches the transmission region 31 with the face region in accordance with the transmission mode (step S204). Specifically, an upper left point of the transmission region 31 is determined such that the face region is included in the transmission region 31, as shown in FIG. 4. The effective region 32 is then set in the transmission region 31 (step S205). The image in the transmission region 31 shown in FIG. 4 is monitor-displayed toward the user 1 by the display part 3 (step S206). In the step S206, the display of the image of the user 1 himself or herself may be omitted, and only the mark R may be displayed. The user 1 then judges whether or not framing monitor-displayed using the input part 2 is preferable (the transmission region 31 is locked) (step S207). When the user 1 desires to offset the transmission region 31, the input part 2 adjusts the position of the transmission region 31 upon receipt of movement information (step S215). Thereafter, the procedure returns to the step S205. In the step S205, reconfirmation is required of the user 1.

When the framing is completed in the step S207, image communication with the other party is started (step S208). A suitable interruption processing part can be also provided to perform the processing in the steps S201 to S207 even during the communication. When the communication is started, the image of the other party which is stored in the other-party-image memory 11 is displayed on the screen of the display part 3 through the communication part 9 and the received data processing part 10 (step S209). The camera part 4 photographs the user 1 again (step S210), the face extraction part 7 extracts the face region (step S211), and the transmitting data processing part 8 checks whether or not the face region deviates from the effective region 32 (step 212).

If the face region deviates from the effective region 32, as shown in FIG. 6, the transmitting data processing part 8 moves the upper left point of the transmission region 31 in accordance with the transmission mode (step S213), as in the step S204, and rechecks whether or not the face region extracted again in the face extraction part 7 deviates from the effective region 32 (steps S211 and S212). On the other hand, unless the face region deviates from the effective region 32, the transmitting data processing part 8 continues the communication without moving the transmission region 31. When the user desires to establish the communication without anxiety while confirming how himself or herself is displayed, a picture-in-picture system, for example, may be used to display on the screen the image of the other party as well as the image of his or her own.

The processing in the steps S209 to S213 is repeated until the communication is terminated (step S214).

As described in the foregoing, in the image communication terminal according to the first embodiment of the present invention, photographing and image communication substantially following the movement of the user can be carried out without using a large-scale follow-up mechanism and degrading the portability of the image communication terminal. That is, the user is photographed in a preferable framing without being anxious how he or she is displayed, so that the image of his or her own is transmitted to the other party. If the face region is within the effective region, the transmission region is not moved. Accordingly, the image transmitted to the other party and particularly, the background image on the side of the user is not frequently blurred, thereby making it possible to prevent the other party from getting sick.

As is well known, some cameras used in the camera part 4 have an automatic exposure correction function. The automatic exposure correction is the function of automatically correcting the luminance of an image such that it is optimized, and is generally performed by changing the luminance of each of pixels in the image on the basis of the average luminance of the entire image or several points. In a case where the average luminance of the face region is lower than the average luminance of the entire target image, for example, in the case of backlight, the face of the user 1 becomes completely black.

As a measure against such a case, therefore, the transmitting data processing part 8 may correct the luminance of the target image picked up by the camera part 4 such that the visibility of the face is improved on the basis of the face region extracted by the face extraction part 7, and then transmit the target image to the communication part 9.

Specifically, the transmitting data processing part 8 previously stores an ideal value of the average luminance (an ideal average luminance $a$) inside the face region. The transmitting data processing part 8 finds the average luminance I inside the face region extracted by the face extraction part 7, and changes luminance Y1 of the target image picked up by the camera part 4 to new luminance Y2. Accordingly, each of the pixels in the target image is subjected to $Y2 = Y1 \times (a/I)$. Consequently, the transmitting data processing part 8 can make the correction such that the average luminance I inside the face region reaches the ideal average luminance $a$. Further, it is also considered that not only the luminance but also the color tone can be similarly changed using the ideal average luminance $a$.

In addition thereto, the transmitting data processing part 8 may, in some cases, have an exposure level to be set of the camera part 4 in which the average luminance I inside the face region is the ideal average luminance *a*. In this case, the transmitting data processing part 8 can make the correction such that the brightness of the face region has an ideal value by notifying the camera part 4 of the exposure level corresponding to the average luminance I inside the face region.

Even in the case of backlight, therefore, it is possible to transmit such an image that the face of the user 1 is always seen toward the other party. Consequently, it is possible to carry on a dialogue with the other party using the image communication terminal without being anxious about a surrounding illumination environment even outdoors.

(Second Embodiment)

In the above-mentioned first embodiment, description was made of the method in which a suitable image having a user caught in its frame can be transmitted to the other party by automatically matching the image communication terminal with the movement of the user using a simple follow-up mechanism.

In the second embodiment, description is made of a method in which a suitable image having a user caught in its frame can be transmitted to the other party by performing such display that the user can move with an image communication terminal without using a follow-up mechanism.

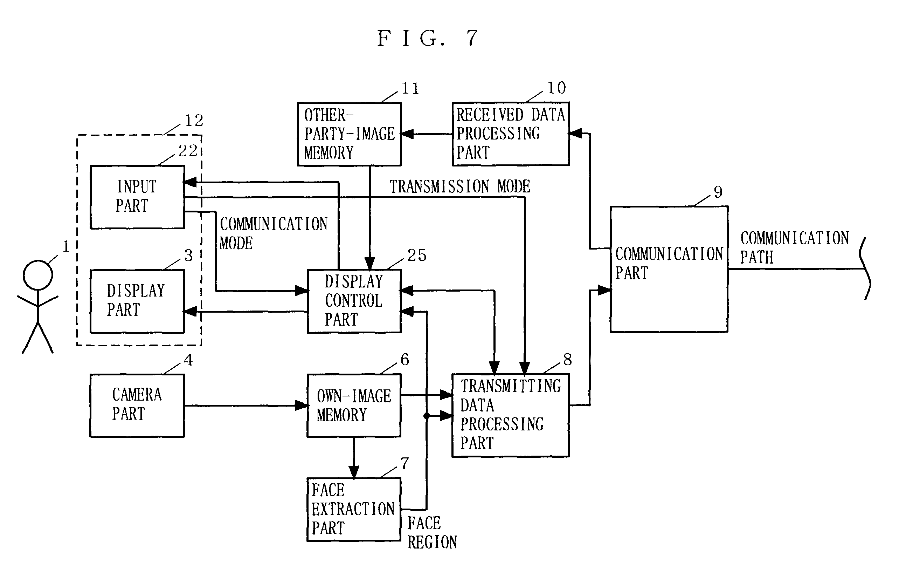

FIG. 7 is a block diagram showing the configuration of an image communication terminal according to the second embodiment of the present invention. In FIG. 7, the image communication terminal according to the second embodiment comprises an input part 22, a display part 3, a camera part 4, a display control part 25, an own-image memory 6, a face extraction part 7, a transmitting data processing part 8, a communication part 9, a received data processing part 10, and an other-party-image memory 11.

The outline of each of the parts constituting the image communication terminal according to the second embodiment will be first described.

As shown in FIG. 7, in the image communication terminal according to the present embodiment, the input part 22, the display part 3, and the camera part 4 face a user 1.

The input part 22 is composed of a keyboard (including ten-keys, etc.), a mouse, and so forth, and is utilized for the user 1 to enter a notification mode, a transmission mode and other necessary information. In the present embodiment, the ten-keys which can light up (or flicker) are provided in the input part 22.

The display part 3 is composed of an LCD or the like, and displays toward the user 1 an image of the other party, a mark conforming to an instruction from a display control part 25, and so forth on its screen. The mark is an index by which the user 1 can confirm the position and the size of his or her face in the screen, as described in detail later. The input part 22 and the display part 3 constitute a notification part 12 for notifying the user 1 of the position and the size of the face of the user 1 in an image to be transmitted to the other party.

The camera part 4 is composed of an optical system such as a lens and an electrical system such as a CCD, and is used for photographing the user 1. An image picked up by the camera part 4 (a target image) is stored in the own-image memory 6 for each frame.

The display control part 25 controls display on the screen of the display part 3 (mainly, display of the received image of the other party). Further, the display control part 25 causes the mark to be displayed on the screen of the display part 3 or causes the ten-key in the input part 22 to light up on the basis of a face region extracted by the face extraction part 7 in response to the notification mode inputted from the input part 22.

The face extraction part 7 examines, with respect to the target image stored in the own-image memory 6, the position and the size of the face which exists, and outputs the information to the display control part 25 and the transmitting data processing part 8 as the face region. As for the face extraction part 7, a method which is applicable to the present invention will be described in detail later.

The transmitting data processing part 8 feeds the target image stored in the own-image memory 6 as it is or by being subjected to processing, described later, to the communication part 9 in accordance with the transmission mode designated from the input part 22.

The communication part 9 communicates at least the image data to an information processor (including an image communication terminal) on the side of the other party through a communication path. The communication mode herein is arbitrary, which may be communication between slave units without passing through a master or the like, for example, an extension or synchronous or asynchronous communication passing through a master, for example, a television telephone set.

The received data processing part 10 processes data representing the image of the other party which has received through the communication part 9, and stores the processed image data in the other-party-image memory 11 for each frame.

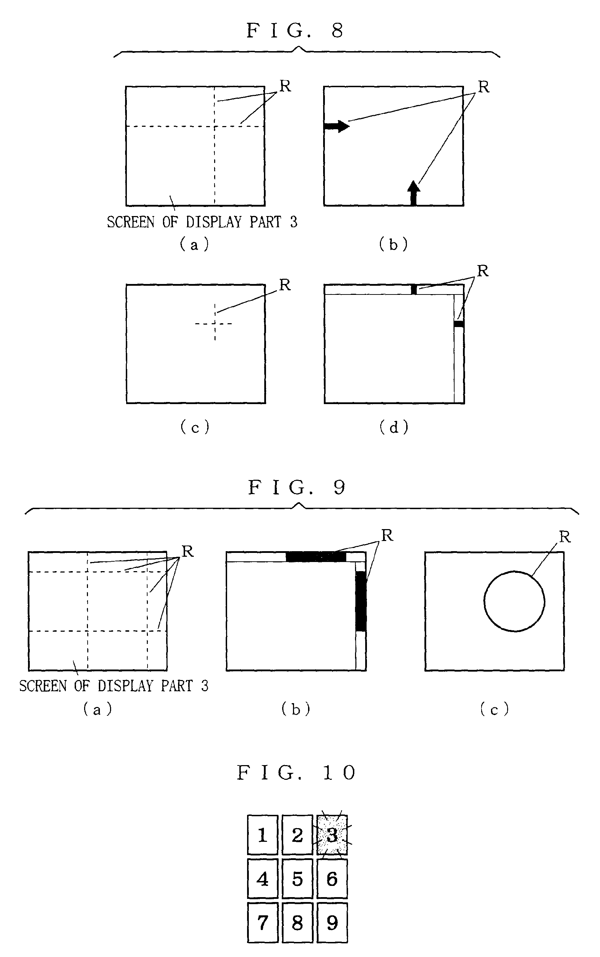

Referring now to FIGS. 8 to 10, examples of a mark which the display control part 25 displays on the screen of the display part 3 will be described. The examples can be used suitably in combination.

(a) to (d) of FIG. 8 are examples in which only the position of the face of the user 1 (the center of the face region extracted by the face extraction part 7 herein) is displayed by a mark R on the screen of the display part 3. A region indicated by a rectangle is the screen of the display part 3, on which the image of the other party is displayed. In (a) to (c) of FIG. 8, the mark R is displayed, superimposed on the image of the other party. In (d) of FIG. 8, the mark R is displayed outside the image of the other party. The display of the mark R may be updated in synchronization with the frame of the image of the other party, or may be asynchronously updated.

(a) of FIG. 8 uses cross lines as the mark R so that an intersection of the lines indicates the position of the face of the user 1. (b) of FIG. 8 uses arrows as the mark R so that a point specified by both the arrows indicates the position of the face of the user 1. (c) of FIG. 8 uses a cross or × mark as the mark R so that the position of the mark indicates the position of the face. (d)of FIG. 8 uses vertical and horizontal rulers displayed outside the image of the other party as the mark R so that a point specified by a mark put on the vertical ruler and a mark put on the horizontal ruler indicates the position of the face of the user 1.

(a) to (c) of FIG. 9 are examples in which the position and the size of the face of the user 1 (the whole of the face region extracted by the face extraction part 7) are displayed by a mark R on the screen of the display part 3. In (a) of FIG. 9, respective two vertical and horizontal parallel lines are used as the mark R so that a rectangular region enclosed by the parallel lines indicates the position and the size of the face of the user 1. In (b) of FIG. 9, vertical and horizontal rulers displayed outside the frame of the image of the other party are used as the mark R so that a region specified by a mark with a width put on the vertical ruler and a mark with a width put on the horizontal ruler indicates the position and the size of the face of the user 1. In (c) of FIG. 9, a circle (or an ellipse) which approximates the face region is used as the mark R so that the circle indicates the position and the size of the face of the user 1.

The marks R may be displayed without depending on the image of the other party or may be displayed depending on the image. As an example of the former, the mark R is displayed in a predetermined color (e.g., only black) irrespective of the image of the other party. As an example of the latter, when the mark R to be displayed is difficult to know on the image of the other party, the luminance of a pixel for displaying the mark R is changed, or its RGB value is changed (reversed). In either case, it is desirable that the mark R is displayed not to interfere with the image of the other party.

Furthermore, FIG. 10 illustrates an example in which the approximate position of the face of the user 1 is displayed by not the display part 3 but the input part 22. As shown in FIG. 10, the ten-keys which can light up are used as the mark R, and any one of the ten-keys is caused to light up, thereby making it possible to notify the user 1 of the position of the face. In FIG. 10, the key "3" lights up, so that the user 1 can be notified that the position of the face is at the "upper right" of the screen. Similarly, it is possible to display the schematic position, for example, the "upper left" of the screen if the key "1" lights up, the "middle" of the screen if the key "5" lights up, and the "lower right" of the screen if the key "9" lights up. Even if the user 1 is notified of such a schematic position, it is worth practical applications.

In the present embodiment, it is possible to choose which of the methods shown in FIGS. 8 to 10 is used to notify the user 1 of the position of the face in the notification mode given to the display control part 25 from the input part 22. Further, the notification may be always made, or may be made only when the user 1 instructs the input part 22 to make notification. Further, a method of notifying the user of the schematic position can be also carried out by sound or light in addition to the lighting of the ten-key in the input part 22 shown in FIG. 10. It is considered that in a case where the notification is made by sound from a speaker, the interval and the frequency of the sound are changed depending on the position of the face. On the other hand, it is considered that in a case where the notification is made using light which is turned on, the brightness of the light and the interval for flashing of the light are changed depending on the position of the face.

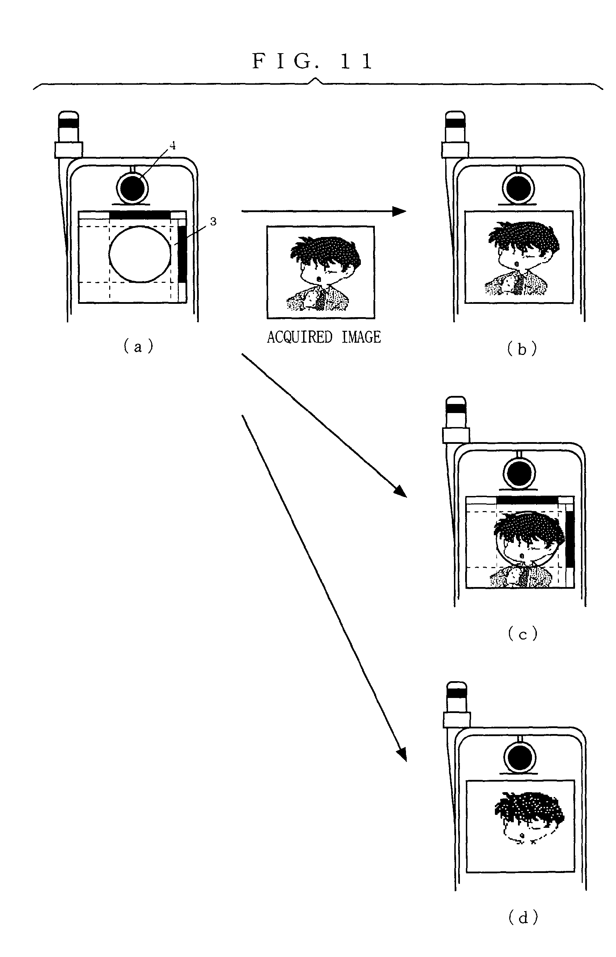

Then referring to FIG. 11, description is made of an example of the image of the user 1, which the transmitting data processing part 8 transmits through the communication part 9. In the present embodiment, the image transmitted to the other party can be selected by the transmission mode given to the transmitting data processing part 8 from the input part 22.

On the side of the user 1 (on his or her own side), a mark R as shown in (a) of FIG. 11 (a combination of (a) to (c) of FIG. 9) shall be displayed on the image of the other party. At this time, the transmitting data processing part 8 can transmit the image of his or her own to the other party in various forms by the transmission mode. For example, if the transmission mode is "normal", the transmitting data processing part 8 transmits the image acquired by the camera part 4 as it is, as shown in (b) of FIG. 11. If the transmission mode is "with a mark", the transmitting data processing part 8 refers to the face region extracted by the face extraction part 7, produces an image of his or her own obtained by synthesizing the mark R with the acquired image, and transmits the image to the other party, as shown in (c) of FIG. 11. Further, if the transmission mode is "only a face", the transmitting data processing part 8 transmits to the other party an image of his or her own obtained by cutting only the face region extracted by the face extraction part 7 from the acquired image, as shown in (d) of FIG. 11.

Since the image processing based on the transmission mode can be simply realized by a known technique, the detailed description thereof is omitted. If the image of his or her own is transmitted in the transmission mode "with a mark", as shown in (c) of FIG. 11, the user can cause the other party to grasp his or her own position even if an image in which his or her own position is difficult to know (an image in darkness), for example, is transmitted, it is possible for the other party to accurately grasp the position. If the image of his or her own is transmitted in the transmission mode "only a face", as shown in (d) of FIG. 11, a background is not displayed. Accordingly, a portion which is not desired to be seen by the other party can be concealed, thereby making it possible to protect privacy. Even if the background is thus concealed, his or her expression or the like is transmitted to the other party, not to interfere with a conversation.

If the above-mentioned transmission modes are unique, they can be distinguished by another arbitrary distinguishing method.

As described in the foregoing, in the image communication terminal according to the second embodiment of the present invention, the positional relationship on the screen on the side of the user can be represented simply and suitably using the mark based on the extracted face region. Consequently, the user can continue a conversation with the other party without anxiety while confirming, not only when the position of his or her face deviates from the screen but also when it does not deviate from the screen, the position of the face. Further, the follow-up mechanism is omitted, as compared with the first embodiment. Accordingly, the portability of the image communication terminal can be improved.

(Detailed Examples of Face Extraction Part 7)

Three types of specific examples of the face extraction part 7 which is applicable to the image communication terminals according to the first and second embodiments of the present invention, described above, will be described. Various known methods such as a method based on color information, a method paying attention to a part of the face, for example, the eye or the mouth, and a method using template matching are applicable to the face extraction part 7 in addition to three methods, described below.

<Example 1>

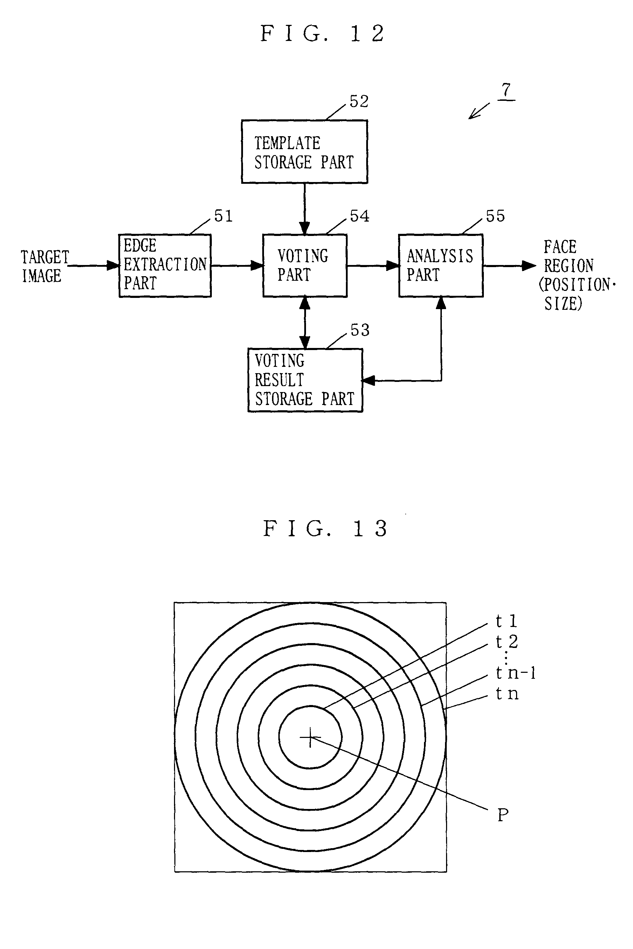

FIG. 12 is a block diagram showing the configuration of the face extraction part 7 in an example 1. In FIG. 12, the face extraction part 7 comprises an edge extraction part 51, a template storage part 52, a voting result storage part 53, a voting part 54, and an analysis part 55.

The edge extraction part 51 extracts an edge part from a target image picked up by the camera part 4, to generate an image having only the edge part (hereinafter referred to as an edge image). Here, the edge part is a part (pixels) outlining the human body and face, for example, and is a part to be a high frequency component in the target image. An example of the edge extraction part 51 is preferably a Sobel filter for taking out the high frequency component from the target image.

The template storage part 52 previously stores data representing a template having a plurality of concentric shapes, which are similar but different in size, provided at its center point. Although the shape of the template may be a circle, an ellipse, a regular polygon, a polygon, or the like, it is most preferably a circle because the distance from the center point to an outline of the shape (each of pixels forming the shape) is always constant, thereby making it possible to improve the accuracy of the results of voting, described later.

In the example 1, description is now made of a case using a template having a plurality of concentric circles, which differ in radius from a center point P, provided therein, as shown in FIG. 13. The plurality of circles t1 to tn (n is an arbitrary integer) composing the template may uniformly vary in radius or may irregularly vary in radius, as in the template shown in FIG. 13. Further, all the plurality of circles t1 to tn composing the template may be outlined by a one-dot line (corresponding to a pixel in the target image), or some or all of them may be outlined by a two-dot or thicker line (i.e., an annular ring). In the following description, the circle and the annular ring will be generically referred to as a "circle".

The plurality of circles t1 to tn are stored in the template storage part 52 as one template, but are independently handled in practical processing. Therefore, pixel data forming each of the circles t1 to tn is stored in the form of a table, for example, in the template storage part 52.

The voting result storage part 53 has regions storing the results of voting processing performed in the voting part 54, described later (hereinafter referred to as voting storage regions), respectively for the shapes composing the template stored in the template storage part 52. In this example, the shapes are respectively the circles t1 to tn. Accordingly, n voting storage regions are provided with respect to the circles t1 to tn in the voting result storage part 53. Each of the voting storage regions has a range corresponding to the target image.

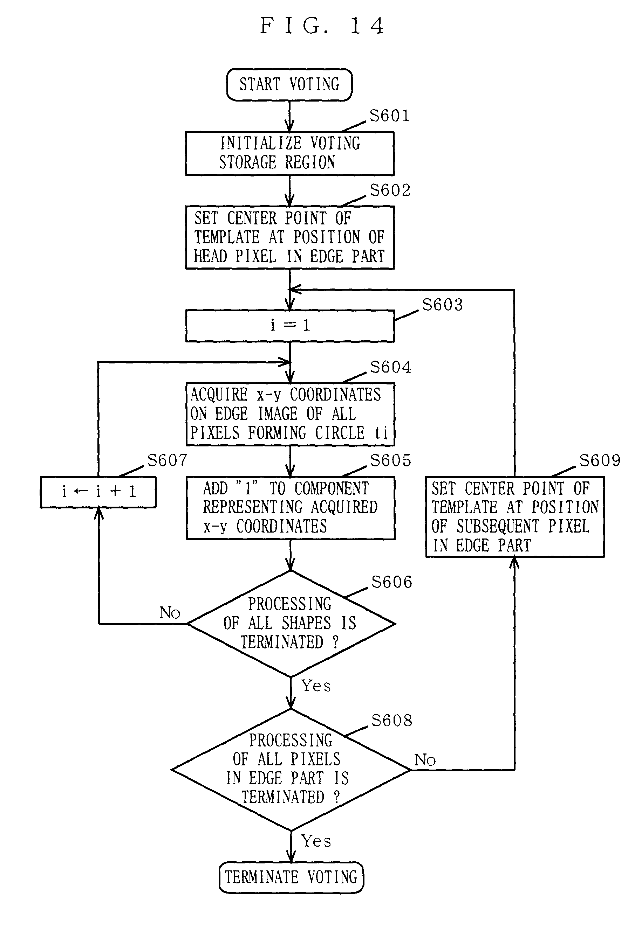

As for the edge image generated in the edge extraction part 51, the voting part 54 performs voting processing using the template stored in the template storage part 52. FIG. 14 is a flow chart showing the procedure for the voting processing performed in the voting part 54.

Referring to FIG. 14, the voting part 54 first accesses the voting result storage part 53, to initialize all of components (voting values) representing x-y coordinates in each of the voting storage regions to zero (step S601). The voting part 54 then sets the center point P of the template at the position of the head pixel in the edge part in the edge image (step S602). The position of the head pixel may be the position of the pixel first detected after sequentially scanning the edge image, vertically or horizontally, from the upper left, for example.

The voting part 54 then initializes a counter $i$ for specifying the shapes (circles t1 to tn in this example) composing the template to one (step S603). The voting part 54 respectively acquires, with respect to the circle t1 specified by the counter $i$ (= 1), x-y coordinates on the edge image of all the pixels forming the circle t1 (step S604). The voting part 54 then adds "1" to each of the components representing the acquired x-y coordinates in the voting storage region for the circle t1 provided in the voting result storage part 53, to perform voting processing (step S605).

When the processing is terminated, the voting part 54 increments the counter $i$ by one ($i$ = 2) (step S607). The voting part 54 then respectively acquires, with respect to the circle t2 specified by the counter $i$ (= 2), x-y coordinates on the edge image of all the pixels forming the circle t2 (step S604). The voting part 54 then adds "1" to each of the components representing the acquired x-y coordinates in the voting storage region for the circle t2 provided in the voting result storage part 53, to perform voting processing (step S605).

Thereafter, the voting part 54 repeatedly performs the voting processing in the foregoing steps S604 and S605 with respect to the circles t3 to tn which are all the shapes composing the template in the same manner as above while incrementing the counter $i$ until $i$ becomes n (steps S606 and S607). Consequently, each of the respective voting storage regions for the circles t1 to tn is subjected to voting processing at the position of the head pixel.

Furthermore, the voting part 54 sets the center point P of the template at the position of the subsequent pixel in the edge part, and repeats the processing in the steps S603 to S607. This is performed with respect to all the pixels in the edge part in the edge image, one pixel at a time (steps S608 and S609). That is, the voting processing by the voting part 54 is performed such that the center point P of the template does not miss any of the pixels in the edge part.

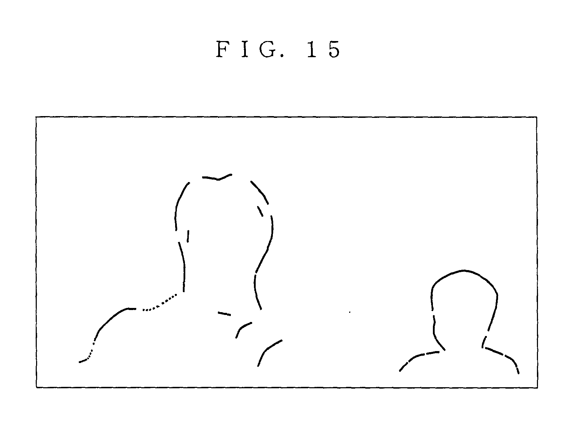

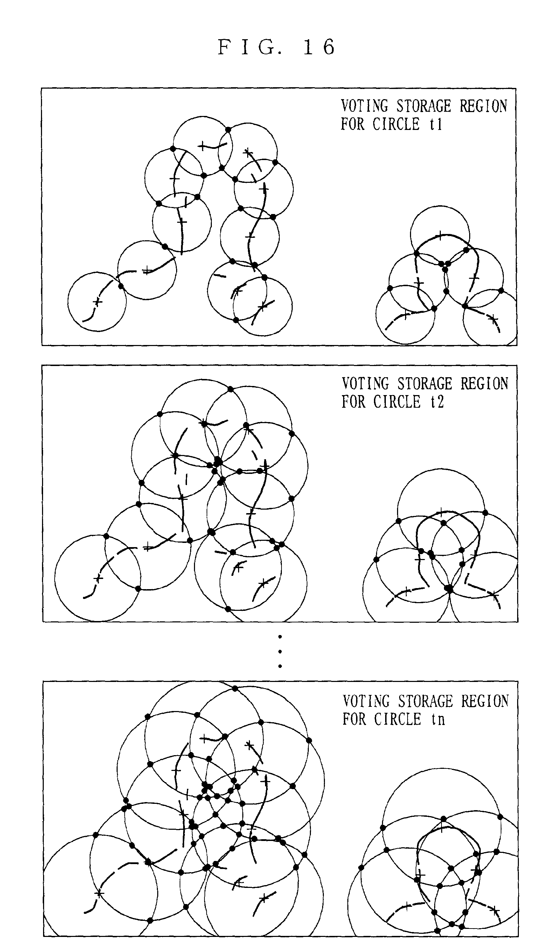

By subjecting the edge image shown in FIG. 15 to the above-mentioned voting processing, for example, the n voting storage regions provided in the voting result storage part 53 respectively store voting values as shown in FIG. 16. FIG. 16 shows a case where the voting processing is performed at the positions of some of the pixels in the edge part for simplicity of illustration. In FIG. 16, a circle indicated by a solid line corresponds to components representing x-y coordinates voted on the basis of the shapes (the circles t1 to tn) composing the template in the step S605, where the voting value is "1". Since the voting values are accumulated, as described above, a portion where the circles cross (indicated by a ● dot) shown in FIG. 16 indicates that the larger the number of crossings is, the higher the voting value is.

If the edge part representing the contour of the face which approximates a circle or an ellipse having a center point is subjected to the above-mentioned voting processing, therefore, high voting values are concentrated in the vicinity of the center point. If a portion where high voting values are concentrated is judged, therefore, the center of the face can be specified. Such a phenomenon that high voting values are concentrated appears more noticeably when a circular shape, having a radius equal to or approximately equal to the minimum width of the edge part representing the contour of the face, in the template. If it is judged in which voting storage region the phenomenon appears noticeably, the size of the face can be specified. This seems to be similar to generalized Hough transformation. However, the face image extraction method according to the present invention definitely differs from the generalized Hough transformation in that the center point of the edge part as well as the size thereof can be specified at one time by using the template composed of the concentric shapes which differ in size.

In the foregoing step S601, voting processing may be performed by initializing all the components representing the x-y coordinates in each of the voting storage regions to predetermined maximum values and respectively subtracting "1" from each of the components representing the acquired x-y coordinates in the step S605. In this case, if a portion where low voting values are concentrated is judged, the center of the face can be specified. If it is judged in which voting storage region the phenomenon appears noticeably, the size of the face can be specified.

In the foregoing step S605, a value for adding or subtracting the voting value may be other than "1", and can be arbitrarily set.

A method of specifying the face region in the target image on the basis of the results of the voting stored in the voting result storage part 53.

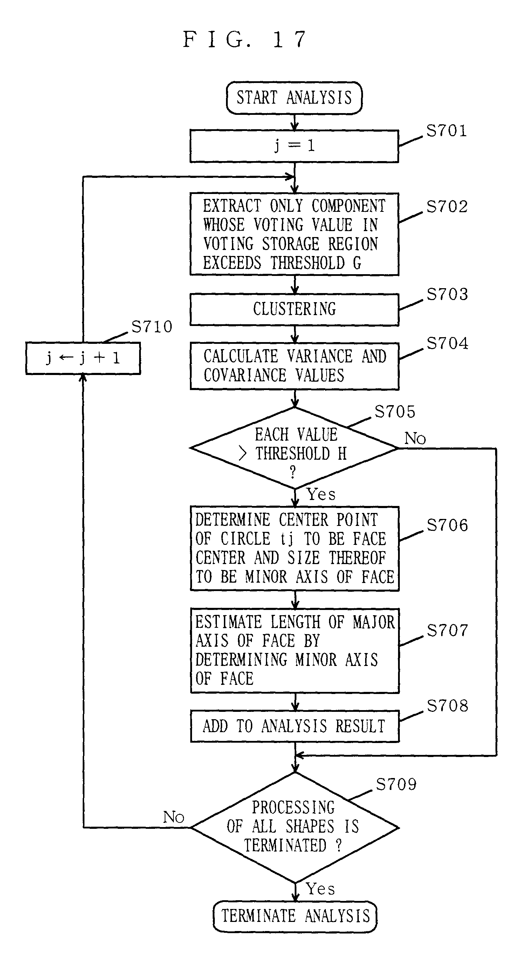

The analysis part 55 performs, after the voting processing by the voting part 54 is completed, cluster evaluation on the basis of the results of the voting stored in the voting result storage part 53, to find the position and the size of the face included in the target image. FIG. 17 is a flow chart showing the procedure for analysis processing performed in the analysis part 55.

Referring to FIG. 17, the analysis part 55 first sets a counter j for specifying the shapes (the circles t1 to tn in this example) composing the template to "1" (step S701). The analysis part 55 then refers, with respect to the circle t1 specified by the counter j (= 1), to the results of the voting stored in the voting storage region for the circle t1 in the voting result storage part 53, to extract only a component whose voting value exceeds a predetermined threshold value G (e.g., 200) (step S702). The threshold value G can be arbitrarily determined on the basis of the definition of the target image and the desired accuracy for detection. The analysis part 55 performs clustering only for the extracted component or components (step S703), and respectively calculates variance and covariance values for each clustered region (step S704). Similarity in the clustering may be judged using any of Euclidean squared distance, generalized Euclidean squared distance, Maharanobis distance, and Minkowski distance. Further, in order to form clusters, any of SLINK (single linkage clustering method), CLINK (complete linkage clustering method), and UPGMA (unweighted pair-group method using arithmetic averages) may be used.

The analysis part 55 then compares the variance and covariance values for each clustered region with a predetermined threshold value H (step S705). When the values are less than the threshold value H in the step S705, the analysis part 55 takes a center point of the region as the center point of the face. The size (the diameter) of the circle t1 indicated by the counter j (= 1) at this time is determined as a minor axis of the face (step S706), and a length obtained by adding a constant value (empirically determined) to the minor axis is determined as a major axis of the face (step S707). The analysis part 55 stores the determined center point, minor axis and major axis as the results of the analysis (step S708). On the other hand, when the values are not less than the threshold value H in the step S705, the analysis part 55 judges that the center point of the region is not the center point of the face, after which the procedure proceeds to the subsequent processing.

When the processing is terminated, the analysis part 55 increments the counter j by one (i = 2) (step S710). The analysis part 55 then refers, with respect to the circle t2 specified by the counter j (= 2), to the results of the voting stored in the voting storage region for the circle t2 in the voting result storage part 53, to extract only a component whose voting value exceeds a predetermined threshold value G (step S702). The analysis part 55 then performs clustering only for the extracted component or components (step S703), and calculates variance and covariance values for each clustered region (step S704).

The analysis part 55 then compares the variance and covariance values for each clustered region with a predetermined threshold value H (step S705). When the values are less than the threshold value H in the step S705, the analysis part 55 takes a center point of the region as the center point of the face. The size of the circle t2 indicated by the counter j (= 2) at this time is determined as a minor axis of the face (step S706), and a length obtained by adding a predetermined value to the minor axis is determined as a major axis of the face (step S707). The analysis part 55 stores the determined center point, minor axis and major axis as the results of the analysis (step S708). On the other hand, when the values are not less than the threshold value H in the step S705, the analysis part 55 judges that the center point of the region is not the center point of the face, after which then the procedure proceeds to the subsequent processing.

Thereafter, the analysis part 55 repeatedly performs the analysis processing in the foregoing steps S702 to S708 with respect to the voting storage regions for the circles t3 to tn stored in the voting result storage part 53 in the same manner as above while incrementing the counter j until j becomes n (steps S709 and S710). Consequently, it is possible to obtain the results of the analysis of the face region extraction in the voting storage regions for the circles t1 to tn.

The results of the analysis are outputted to the display control parts 5 and 25 and the transmission data processing part 8.

As such, in the face extraction part 7 in the example 1, the position of the face can be extracted at high speed only by performing voting processing (basically, only addition) whose load is light and evaluating the voting values. Moreover, the template comprising the plurality of concentric shapes which are similar is used. Accordingly, a substantial approximation is made as to which of the shapes is approximately equal to the edge part which will be the face region, thereby making it possible to also extract the size of the face at high speed.

<Example 2>

As an example 2, a method effective in a terminal requiring a limited processing amount as in a portable telephone set or the like by performing pattern matching in a space after orthogonal transformation to reduce the processing amount will be then described.

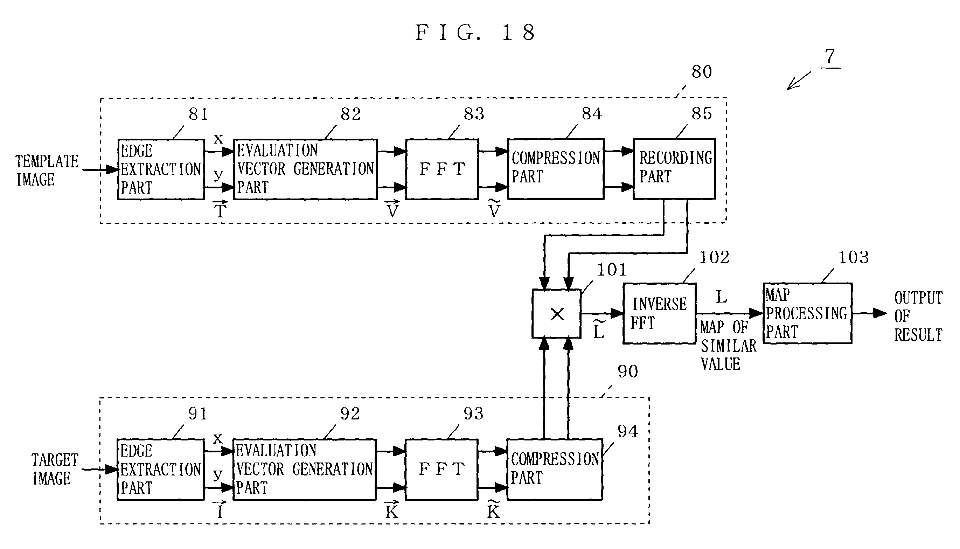

FIG. 18 is a block diagram showing the configuration of the face extraction part 7 in the example 2. In FIG. 18, the face extraction part 7 comprises a template image processing part 80, an input image processing part 90, a multiplication part 101, an inverse orthogonal transformation part (inverse FFT) 102, and a map processing part 103. The method in the example 2 is for respectively subjecting a template image and an input image (a target image) to orthogonal transformation having linearity in the template image processing part 80 and the input image processing part 90, multiplying the images, and then subjecting the images to inverse orthogonal transformation, to find a similar value L.

Although in the example 2, description is made of a case where FFT (Fast Fourier Transformation) is used as the orthogonal transformation, Hartley transformation, arithmetic transformation, or the like can be also used. When the other transformation method is used, "Fourier Transformation" in the following description may be changed into the used transformation.

In both the template image processing part 80 and the input image processing part 90, the inner product of edge normal vectors is utilized so that the more the same direction the edge normal vectors are directed, the higher a correlation becomes. Moreover, the inner product is evaluated using even multiples of an angle between the vectors. Although a double angle is described for simplicity as an example, the same effect as that in the example 2 can be also produced using even multiples of the angle other than the double angle, for example, a quadruple angle and a sextuple angle.

The template image processing part 80 will be first described.

In FIG. 18, the template image processing part 80 comprises an edge extraction part 81, an evaluation vector generation part 82, an orthogonal transformation part (FFT) 83, a compression part 84, and a recording part 85.

The edge extraction part 81 subjects the inputted template image to differential processing (edge extraction) in both the x-direction and the y-direction, to output an edge normal vector of the template image.

In the example 2, a Sobel filter given by the following expression (1) and a Sobel filter given by the following expression (2) are respectively used in the x-direction and the y-direction:

$$\begin{bmatrix} -1 & 0 & 1 \\ -2 & 0 & 2 \\ -1 & 0 & 1 \end{bmatrix} \qquad \cdots (1)$$

$$\begin{bmatrix} -1 & -2 & -1 \\ 0 & 0 & 0 \\ 1 & 2 & 1 \end{bmatrix} \qquad \cdots (2)$$

An edge normal vector of the template image, which is defined by the following expression (3), is found from the Sobel filters (1) and (2):

$$\vec{T} = (T_X, T_Y) \tag{3}$$

The evaluation vector generation part 82 receives the edge normal vector of the template image from the edge extraction part 81, performs processing, described below, and outputs an evaluation vector of the template image to the orthogonal transformation part 83.

The evaluation vector generation part 82 first normalizes the edge normal vector of the template image with respect to its length using the following expression (4):

$$U = (U_X, U_Y) = \frac{\vec{T}}{|\vec{T}|} \tag{4}$$

This is for considering that when the photographing conditions are changed, for example, illumination varies, the strength (the length) of an edge is easily affected, while the angle of the edge is not easily affected. In the example 2, an edge normal vector of the target image is normalized so as to have a length "1" in the input image processing part 90, as described later. Correspondingly, the edge normal vector of the template image is normalized so as to have a length "1" even in the template image processing part 80.

A formula of double angles given by the following expression (5) holds with respect to a trigonometric function, as is well known:

$$\cos(2\theta) = 2\cos(\theta)^2 - 1$$

$$\sin(2\theta) = 2\cos(\theta)\sin(\theta) \tag{5}$$

The edge vector is normalized on the basis of the following

expression (6) using the formula of double angles:

$$if \; |\vec{T}| \geq a$$

$$\vec{V} = (V_X, V_Y) = \cos(2\theta), \sin(2\theta) = 2U_X{}^2 - 1, 2U_X U_Y$$

$$else$$

$$\vec{V} = \vec{0} \tag{6}$$

The expression (6) will be described. First, a constant a is a threshold value for removing a very small edge. It is for removing noises or the like that a vector smaller than the constant a is taken as a zero vector.

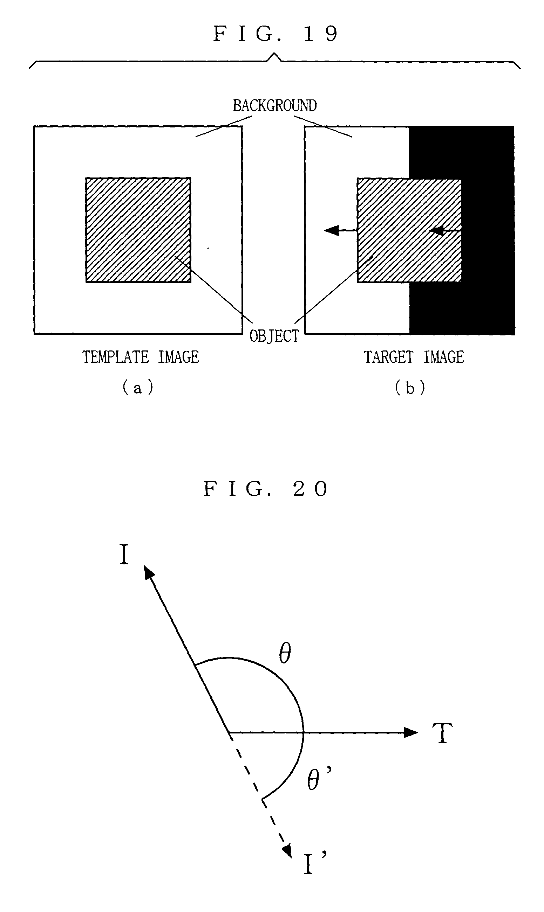

The point that each of x and y components is a cosine · sine dependent function related to a double angle of the component in the expression (4) will be described. When an angle between an evaluation vector T of the template image and an evaluation vector I of the target image is taken as θ, and the inner product of θ, i.e., cos θ is used as a similarity scale, the following problems arise. For example, it is assumed that the template image is as shown in (a) of FIG. 19, and the target image is as shown in (b) of FIG. 19. In an image in a background portion shown in (b) of FIG. 19, its left half is brighter than an object, and its right half is darker than the object. When the center of the template image shown in (a) of FIG. 19 coincides with the center of the target image shown in (b) of FIG. 19, an object in the template image and the object in the target image completely coincide with each other. Accordingly, a similar value must reach its maximum at this time. The directions of the edge normal vector must be the same (outward/inward), as viewed from the object, even in a light background portion and a dark background portion shown in (b) of FIG. 19, when a direction outward from the image of the object is taken as a positive direction.

If the luminance of the background image shown in (b) of FIG. 19 varies on the right and left sides of the object, however, the directions of the edge normal vector are opposite (outward in the bright background portion, and inward in the dark background portion), as viewed from the object, as indicated by arrows in (b) of FIG. 19.

In such a case, the similar value is not necessarily high in a case where it should inherently reach its maximum. Accordingly, the similar value is liable to be erroneously recognized.

The foregoing will be described in more detail using FIG. 20.

When the inner product cos θ of the angle θ between the evaluation vector T of the template image and the evaluation vector I of the target image is used as a similar value, the direction of the evaluation vector of the target image may be either an I direction or an I' direction directly opposite thereto depending on the variation in luminance of the background image around the object, as described above. Therefore, the inner products which are a similarity scale are of two types: cos θ and cosθ'. Moreover, θ + θ' = π, and cos θ = cos(π - θ')=-cosθ.

Specifically, in a case where cosθ is used as a similarity scale, when the similar value must be inherently increased, it may, in some cases, be conversely decreased. Further, when the similar value must be decreased, it may, in some cases, be conversely increased.

Therefore, in the example 2, the cosine (cos2θ) of a double angle (2θ) is used for an expression of the similar value. Even if cosθ'=-cosθ, therefore, cos2θ'=cos2θ from the formula of double angles given by the expression (5). That is, when the similar value must be increased, the similar value is increased without being affected by the background portion. Even if the background image varies in luminance, therefore, the matching of the images can be properly evaluated. The foregoing holds in not only the double angle but also a quadruple angle and a sextuple angle. Consequently, a pattern can be stably extracted irrespective of the luminance conditions of a background by evaluating a representation of even multiples of the angle θ.

In addition to the representation, not two values *Tx* and *Ty* but one value can represent the value of θ represented as cos θ =*Ty* and sin θ =*Ty* from a combination of *Tx* and *Ty* (i.e., a phase angle in a case where the edge normal vector is represented by polar coordinates). In a case where θ is represented by not 0 to 360º but eight bits, and a minus value is represented by a binary number as a complement of two (i.e., -128 to 127), one added to -128 makes zero, which is a circulation representation. In double angle calculation and similar value calculation related to θ, therefore, processing for changing, when the results of the calculation exceed 127, the results to -128 is automatically performed.

Description is now made of the similar value calculation. More specifically, in the example 2, a similar value L is defined by the following expression (7):

$$L(x,y) = \sum_i \sum_j K_x(x+i, y+j)V_x(i,j) + K_y(x+i, y+j)V_y(i,j) \qquad \cdots \ (7)$$

$\vec{K} = (K_x, K_y)$ : evaluation vector of input image
$\vec{V} = (V_x, V_y)$ : evaluation vector of template image

When the evaluation vector is not ($Vx$, $Vy$) and ($Tx$, $Ty$) but $V\theta$ and $T\theta$, the following expression (8) is obtained:

$$L(x,y) = \sum_i \sum_j K_\theta(x+i, y+j)V_\theta(i,j) \qquad \cdots \ (8)$$

$K_\theta$ : evaluation vector of input image
$V_\theta$ : evaluation vector of template image

Here, the evaluation vector is marked as a vector when the number of its components is one.
Here, the expression (7) and the expression (8) are composed of only addition and multiplication. Accordingly, the similar value L is linear with respect to the respective evaluation vectors of the target image and the template image. When the expression (7) and the expression (8) are subjected to Fourier transformation, the following expressions are obtained from a discrete correlation theorem of Fourier transformation:

$$\tilde{L}(u,v) = \tilde{K}_x(u,v)\tilde{V}_x(u,v)^* + \tilde{K}_y(u,v)\tilde{V}_y(u,v)^* \qquad \cdots \ (9)$$

$\dot{K}_x, \dot{K}_y$ : Fourier transformation values of $K_x$ and $K_y$
$\tilde{V}_x^*, \tilde{V}_y^*$ : Composite conjugates of Fourier transformation of $V_x$ and $V_y$

$$\tilde{L}(u,v) = \tilde{K}_\theta(u,v)\tilde{V}_\theta(u,v)^* \qquad \cdots \ (10)$$

$\dot{K}_\theta$ : Fourier transformation value of $K_\theta$
$\tilde{V}_\theta$ : Composite conjugate of Fourier transformation of $V_\theta$

In the expressions (9) and (10), "~" denotes a Fourier transformation value, and "*" denotes a composite conjugate.
If the expression (9) or (10) is subjected to inverse Fourier transformation, the similar value L given by the expression (7) or the expression (8) is obtained. The following two points will be clear from the expressions (9) and (10):

1. In a transformation value after orthogonal transformation, the Fourier transformation value related to the template image and the Fourier transformation value related to the target image may be simply multiplexed and added.
2. The Fourier transformation value related to the template image and the Fourier transformation value related to the target image need not be simultaneously found. The Fourier transformation value related to the template image may be found prior to the Fourier transformation value related to the target image.

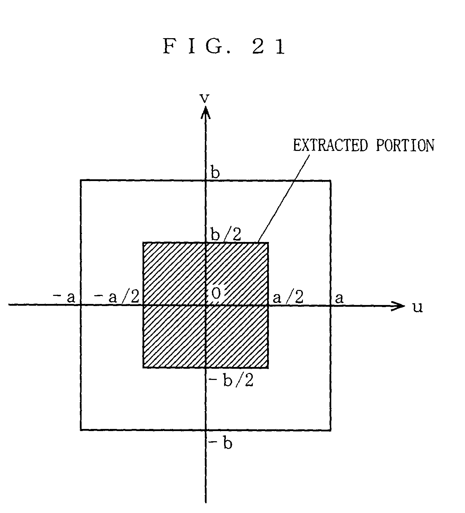

In the example 2, therefore, the recording part 85 is provided in the template image processing part 80, to store an output of the compression part 84 prior to inputting the target image. After the target image is inputted to the input image processing part 90, therefore, the template image processing part 80 needs not perform any processing of the template image. Consequently, the processing capability of the image communication terminal can be concentrated on processing in a stage succeeding the input image processing part 90 and the multiplication part 101, thereby making it possible to perform the processing at higher speed.
Description is now made of the parts in a stage succeeding the evaluation vector generation part 82.
As shown in FIG. 18, in the template image processing part 80, the evaluation vector of the template image outputted from the evaluation vector generation part 82 is outputted to the compression part 84 after being subjected to Fourier transformation by the orthogonal transformation part 83. The compression part 84 reduces the evaluation vector after the Fourier transformation, and stores the reduced evaluation vector in the recording part 85. As shown in FIG. 21, the evaluation vector after the transformation includes various frequency components which are high and low in both the x-direction and the y-direction. Experiments by the inventors and others show that even if all frequency components are not processed, sufficient accuracy can be obtained if low frequency components (for example, their respective halves on the low frequency side in both the x-direction and the y-direction) are processed. In FIG. 21, a region which is not hatched ($-a \leq x \leq a$, $-b \leq y \leq b$) is the original region, and a hatched region ($-a/2 \leq x \leq a/2$, $-b/2 \leq y \leq b/2$) is a region after the reduction. That is, the processing amount is reduced by one-fourth.

Consequently, it is possible to realize the processing at higher speed by reducing a processing object. The compression part 84 and the recording part 85 can be omitted when the amount of data is small and high speed is not required.

The input image processing part 90 will be then described.

In FIG. 18, the input image processing part 90 comprises an edge extraction part 91, an evaluation vector processing part 92, an orthogonal transformation part (FFT) 93, and a compression part 94.

The input image processing part 90 performs the same processing as the template image processing part 80. That is, the edge extraction part 91 outputs an edge normal vector of the target image using the expressions (1) and (2). The evaluation vector generation part 92 receives the edge normal vector of the target image from the edge extraction part 91, and performs the same processing as the evaluation vector generation part 82 in the template image processing part 80, to generate an evaluation vector. The evaluation vector of the target image outputted from the evaluation vector generation part 92 is outputted to the compression part 94 after being subjected to Fourier transformation by the orthogonal transformation part 93. The compression part 94 reduces the evaluation vector after the Fourier transformation, and outputs the reduced evaluation vector to the multiplication part 101. The compression part 94 reduces a processing object to the same frequency band as that in the compression part 84 in the template image processing part 80.

Description is now made of the parts succeeding the multiplication part 101.

When the processing in the template image processing part 80 and the input image processing part 90 is completed, the multiplication part 101 respectively receives the respective Fourier transformation values of the evaluation vectors of the template image and the target image from the recording part 85 and the compression part 94. The multiplication part 101 performs a sum-of-product operation by the expression (9) or (10), and outputs the results thereof (a Fourier transformation value of the similar value L) to the inverse orthogonal transformation part 102. The inverse orthogonal transformation part 102 subjects the Fourier transformation value of the similar value L to inverse Fourier transformation, and outputs a map L (x, y) of the similar value L to the map processing part 103. The map processing part 103 extracts a point taking a high value (a peak) from the map L (x, y), and outputs the position and the value of the point. The parts succeeding the map processing part 103 can be freely constructed, as required.

Let A ($= 2\gamma$) be the size of the target image and B be the size of the template image. In this case, in order to sequentially scan the template image on the target image and find a correlation value at each position, the following number of times of calculation is required:

Number of times of multiplication = 2AB

The number of times of calculation is evaluated by the number of times of multiplication which is high in calculation cost.

On the other hand, in the example 2, two times of FFT by the orthogonal transformation parts 83 and 93, sum-of-product calculation by the multiplication part 101, and one time of inverse FFT by the inverse orthogonal transformation part 102 are required. Accordingly, the following number of times of calculation is sufficient:

Number of times of multiplication = $3\{(2\gamma-4)A+4\}+2A$

When the numbers of times of calculation are compared, the number of times of multiplication in the example 2 is reduced by approximately one-hundredths when $A = 256 \times 256 = 2^{16}$ and $B = 60 \times 60$. Accordingly, the processing can be performed at very high speed, thereby reducing the processing amount.

In the face extraction part 7 in the example 2, the position of the face can be thus extracted in a small processing amount. Even in a scene requiring a limited processing amount, as in a portable image communication terminal, the position and the size of the face can be extracted. Further, even in a scene where the place for photographing and the photographing time are not limited, and all photographing conditions must be assumed, as in the portable image communication terminal, the face can be stably extracted by a representation of a double angle.

<Example 3>

In the face extracting methods in the examples 1 and 2, even when the face does not exist in the target image, a portion close to the face is forced to be extracted as the face region. As an example 3, a method of further judging whether or not the position and the size of the face extracted by the face extracting methods in the examples 1 and 2 are really a face will be described.

In order to realize this, a structure for judging whether or not an extracted face region is a true face (a face/non-face judgment part) is provided in a stage succeeding the analysis part 55 in the example 1 shown in FIG. 12 or in a stage succeeding the map processing part 103 in the example 2 shown in FIG. 18.

When the face/non-face judgment part is provided in the stage succeeding the analysis part 55 in the example 1, the simplest method is to previously determine a threshold value for judging face/non-face, to judge, when a value found from a voting value in a region and the size of the face outputted from the analysis part 55 exceeds the threshold value, that the region is a face. The value found from the voting value and the size of the face is a value obtained by dividing the voting value by the size of the face. Such processing is performed because the voting value proportional to the size of the face is normalized by the size of the face.

When the face/non-face judgment part is provided in the stage succeeding the map processing part 103 in the example 2, the simplest method is to previously determine a threshold value for judging face/non-face, to judge, when a similar value in a region which is outputted from the map processing part 103 exceeds the threshold value, that the region is a face.

Although in the example 1 and the example 2, description was made of a case where the number of face regions outputted from the face extraction part 7 is one, face/non-face judgment in the above-mentioned example 3 can be applied to a case where a plurality of face regions are outputted.

The face region which is not judged to be a face in the face/non-face judgment part is not outputted to the display control part 5 and the transmitting data processing part 8 from the face extraction part 7. The transmitting data processing part 8 in the first embodiment uses, when the face region is not outputted from the face extraction part 7, the transmission region 31 at the previous time as it is without moving the position of the transmission region 31. Further, when the face region is not outputted for a predetermined time period, the transmission region 31 is set at an initial position (for example, at the center of the photographing region 30).

On the other hand, there is not a judging method using a threshold value, described above, but a method of judging face/non-face using a support vector function. The face/non-face judgment using the support vector function will be schematically described.

A support vector itself is a known technique, and is described in detail in a document entitled "Identification of a Plurality of Categories by Support Vector Machines (Technical Report of IEICE (The Institute of Electronics, Information and Communication Engineers) PRMU98-36 (1998-06)".

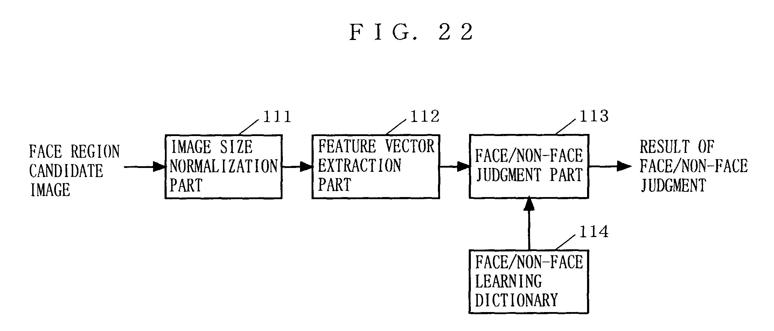

FIG. 22 is a block diagram showing parts, which are added to the configurations in the example 1 and the example 2, in the configuration of the face extraction part 7 in the example 3. In FIG. 22, the added parts in the example 3 include an image size normalization part 111, a feature vector extraction part 112, a face/non-face judgment part 113, and a face/non-face learning dictionary 114. The parts shown in FIG. 22 are added to a stage succeeding the analysis part 55 in the example 1 or a stage succeeding the map processing part 103 in the example 2.

The image size normalization part 111 cuts out an image in a face region portion outputted from the analysis part 55 or the map processing part 103 from a target image. The image size normalization part 111 finds, with respect to the cut image (hereinafter referred to as a face region candidate image), image features in each pixel (for example, edge strength, a color value, a luminance value, etc.), and then normalizes the size of the image to a predetermined size. Description is now made of an example in which the face region candidate image is enlarged or reduced (i.e., normalized) to a size of 10 by 10 pixels. The feature vector extraction part 112 acquires luminance information related to the normalized face region candidate image as one of feature data. In this example, the image is normalized to an image composed of 10 by 10 pixels. Accordingly, a 100-dimensional feature vector $xi$ ($0 \leqq i < 100$) is acquired.

The feature vector extraction part 112 may extract an edge normal vector as a feature vector. Specifically, the face region candidate image is subjected to a Sobel filter in the x-direction and a Sobel filter in the y-direction, to calculate a direction vector on the basis of the strength in the x-direction and the strength in the y-direction in each pixel. In this calculation, the angle and the strength are calculated as values . Accordingly, the strength is ignored, and only the angle is taken out. Each of the directions is normalized on the basis of 256 gray scales, and is used as a feature vector. The feature vector extraction part 112 may calculate a histogram for each normalized angle inside the face region candidate image and extract an edge normal histogram as a feature vector.

The face/non-face judgment part 113 uses feature images and parameters which are previously prepared in the face/non-face learning dictionary 114, to perform face/non-face judgment in the face region by the following expressions for calculation:

$$g(x) = \Sigma \alpha i \times yi \times K(si,x)\text{-b} \qquad (11)$$

$$K(si,xi) = \exp(-\|si\text{-}xi\|2/2\delta2) \qquad (12)$$

K() indicates a Kernel function, $\alpha$ i indicates a corresponding Lagrange coefficient, and *yi* indicates teacher data. +1 is applied when the learning dictionary is a face, while - 1 is applied when it is a non-face.

A polynomial *K (Si, Xi) = (Si·Xi+1)* and a two-layer neural network *K(Si, Xi) = tanh(Si·Xi- δ)* can be used in addition to the foregoing expression (12) as the Kernel function.

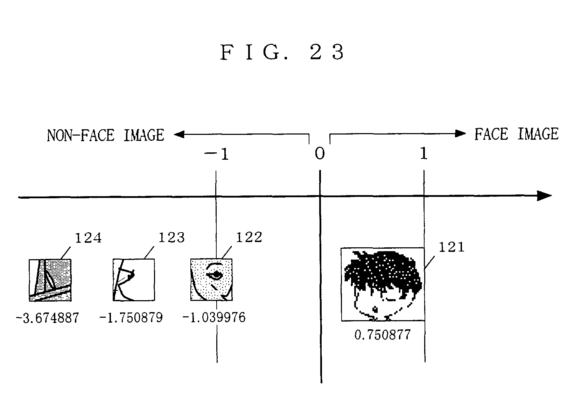

The results of the face/non-face judgment are illustrated in FIG. 23. In the face/non-face judgment part 113, the face region candidate image is judged to be a face image when the results of the foregoing expression (12) are larger than zero, while being judged to be a non-face image when they are smaller than zero. Similarly, the face/non-face judgment is also performed with respect to the other face region candidate image. In the example shown in FIG. 23, it is judged that an image 121 is a face image, and it is judged that images 122 to 124 are non-face images.

In the face/non-face learning dictionary 114, a face image and a non-face image are prepared as teacher data, and a dictionary is produced using the same feature data as that used for identification.

In the face extraction part 7 in the example 3, even when the actual face is thus other than the first candidate for the face region, the face region can be stably extracted. Even when there is no face in an image, it can be judged that there is no face. Accordingly, it is possible to automatically detect a case where the face need not be displayed with the position thereof moved.

While the invention has been described in detail, the foregoing description is in all aspects illustrative and not restrictive. It is understood that numerous other modifications and variations can be devised without departing from the scope of the invention.

**Claims**

1. An image communication terminal for transmitting an image of a user photographed by a camera part to the other party, comprising:

    an input part (2) accepting input from a user;
    a camera part (4) for photographing the user;
    a face extraction part (7) for extracting the position and the size of the face (hereinafter referred to as a face region) of the user from an image picked up by said camera part (4);
    a display part (3) for displaying the image toward the user;
    a communication part (9) for communicating at least the image to an information processor on the side of the other party; and
    a transmitting data processing part (8) for outputting to said communication part (9) an image in a rectangular transmission region smaller than a region including the image picked up by said camera part (4) and set so as to be movable in the region including the image, and
    an effective region which moves integrally with the transmission region being set in the region including the image picked up by said camera part (4),
    said transmitting data processing part (8) moving, when the extracted face region deviates from said effective region, the position where said transmission region is set in conformity with the position of the face region.

2. The image communication terminal according to claim 1, wherein
    said effective region is smaller than said transmission region and is set in the transmission region.

3. The image communication terminal according to claim 1, wherein
    said transmitting data processing part (8) moves, when the extracted face region deviates from the effective region, the transmission region such that the face region is positioned at the center of the transmission region.

4. The image communication terminal according to claim 1, wherein
    said transmitting data processing part (8) moves, when the extracted face region deviates from the effective region, the transmission region such that the face region is positioned above the center of the transmission region.

5. The image communication terminal according to claim 4, wherein
    said transmitting data processing part (8) moves, when the extracted face region deviates from the effective region, the transmission region by being switched in response to transmission mode information inputted from the input part (2) such that the face region is positioned at or above the center of the transmission region.

6. The image communication terminal according to claim 4, wherein

said display part (3) monitor-displays the image in said transmission region and said face region in response to the information inputted from said input part (2), and

the user can adjust the position of the transmission region vertically and horizontally by the input to said input part (2) while referring to said monitor display.

7. The image communication terminal according to claim 1, wherein
   said face extraction part (7) comprises:

an edge extraction part (51) for extracting an edge part (pixels outlining the human body and face) from the image picked up by said camera part (4), and generating an image having only the edge part (hereinafter referred to as an edge image);
a template storage part (52) for storing a template having a plurality of predetermined concentric shapes, which are similar but different in size, provided at its center point;
a voting result storage part (53) for storing the position of coordinates and voting values on said edge image in a one-to-one correspondence for each of the shapes composing said template;
a voting part ( 54 ) for sequentially moving the center point of the template to the positions of the pixels in said edge part and increasing or decreasing, for each of the positions of the pixels to which the center point of the template has been moved, the voting value stored in said voting result storage part (53) with respect to each of the positions of coordinates corresponding to the positions of all the pixels forming the shape; and
an analysis part (55) for finding the position and the size of the face included in said target image on the basis of each of the voting values stored in said voting result storage part (53).

8. The image communication terminal according to claim 7, wherein
   said predetermined shape is a circle.

9. The image communication terminal according to claim 7, wherein
   said face extraction part (7) further comprises a face/non-face judgment part for judging whether or not the position and the size which are extracted as the face from the image picked up by said camera part (4) are really a face on the basis of contents stored in said voting result storage part (53), and outputs the results of the extraction only when it is judged that they are a face.

10. The image communication terminal according to claim 1, wherein

    said face extraction part (7) comprises:

a template image processing part (80) receiving a predetermined template image for finding an edge normal vector of the image, generating an evaluation vector from the edge normal vector, and orthogonally transforming the evaluation vector;
an input image processing part (90) receiving the image picked up by said camera part (4) for finding an edge normal vector of the image, generating an evaluation value from the edge normal vector, and orthogonally transforming the evaluation vector;
a sum-of-products part (101) for calculating, with respect to the respective evaluation vectors after the orthogonal transformation which are generated with respect to the template image and the image picked up, the products of corresponding spectral data, and calculating the sum of the calculated products; and
an inverse orthogonal transformation part (102) for subjecting the results of said calculation to inverse orthogonal transformation, to produce a map of a similar value, and

said evaluation vectors including components obtained by transforming the edge normal vectors of the corresponding images using an even multiple of an angle between the vectors, all an expression for calculating the similar value, the orthogonal transformation, and the inverse orthogonal transformation having linearity.

11. The image communication terminal according to claim 10, wherein
    said face extraction part (7) uses a value calculated on the basis of the angle in a case where the edge normal vectors are represented by polar coordinates in representation of said evaluation vectors.

12. The image communication terminal according to claim 10, wherein
    said face extraction part (7) further comprises a face/non-face judgment part for judging whether or not the position and the size which are extracted as the face from the image picked up by said camera part (4) are really a face on the basis of the similar value generated by said inverse orthogonal transformation part (102), and outputs the results of the extraction only when it is judged that they are a face.

13. The image communication terminal according to claim 1, wherein
said face extraction part (7) further comprises a face/non-face judgment part for judging whether or not the position and the size which are extracted as the face from the image picked up by said camera part (4) are really a face, and outputs the results of the extraction only when it is judged that they are a face.

14. The image communication terminal according to claim 13, wherein
said face/non-face judgment part makes face/non-face judgment on the basis of the results of judgment of a support vector function using image features obtained from a region extracted as the face from the image picked up by said camera part (4).

15. The image communication terminal according to claim 14, wherein
said face/non-face judgment part considers the edge normal vector obtained from the region extracted as the face from the image picked up by said camera part (4) as said image features.

16. The image communication terminal according to claim 14, wherein
said face/non-face judgment part considers an edge normal histogram obtained from the region extracted as the face from the image picked up by said camera part (4) as said image features.

17. An image communication terminal for transmitting an image of a user photographed by a camera part to the other party, comprising:

an input part (2) accepting input from a user;
a camera part (4) for photographing the user;
a face extraction part (7) for extracting the position and the size of the face (hereinafter referred to as a face region) of the user from an image picked up by said camera part (4);
a display part (3) for displaying the image toward the user;
a communication part (9) for communicating at least the image to an information processor on the side of the other party; and
a transmitting data processing part (8) for outputting to said communication part (9) an image in a rectangular transmission region smaller than a region including the image picked up by said camera part (4) and set so as to be movable in the region including the image, and
an effective region which moves integrally with the transmission region being set in the region including the image picked up by said camera part (4),
said transmitting data processing part (8) moving, when the extracted face region deviates from said effective region, the position where said transmission region is set in conformity with the position of the face region, and correcting the luminance of the image in the transmission region and outputting the image to said communication part (9) such that the visibility of the face in the image picked up by the camera part (4) is improved on the basis of the luminance of the image in the extracted face region.

18. The image communication terminal according to claim 17, wherein
said transmitting data processing part (8) also corrects the color tone and outputs the image in the transmission region corrected in color tone to said communication part (9) in addition to the luminance of the image in the transmission region.

19. The image communication terminal according to claim 17, wherein
said face extraction part (7) comprises:

an edge extraction part (51) for extracting an edge part (pixels outlining the human body and face) from the image picked up by said camera part (4), and generating an image having only the edge part (hereinafter referred to as an edge image);
a template storage part (52) for storing a template having a plurality of predetermined concentric shapes, which are similar but different in size, provided at its center point;
a voting result storage part (53) for storing the position of coordinates and voting values on said edge image in a one-to-one correspondence for each of the shapes composing said template;
a voting part (54) for sequentially moving the center point of the template to the positions of the pixels in said edge part and increasing or decreasing, for each of the positions of the pixels to which the center point of the template has been moved, the voting value stored in said voting result storage part (53) with respect to each of the positions of coordinates corresponding to the positions of all the pixels forming the shape; and

an analysis part (55) for finding the position and the size of the face included in said target image on the basis of each of the voting values stored in said voting result storage part (53).

**20.** The image communication terminal according to any one of claim 17, wherein

said face extraction part (7) comprises:

a template image processing part (80) receiving a predetermined template image for finding an edge normal vector of the image, generating an evaluation value from the edge normal vector, and orthogonally transforming the evaluation vector;

an input image processing part (90) receiving the image picked up by said camera part (4) for finding an edge normal vector of the image, generating an evaluation value from the edge normal vector, and orthogonally transforming the evaluation vector;

a sum-of-products part (101) for calculating, with respect to the respective evaluation vectors after the orthogonal transformation which are generated with respect to the template image and the image picked up, the product of corresponding spectral data, and calculating the sum of the calculated products; and

an inverse orthogonal transformation part (102) for subjecting the results of said calculation to inverse orthogonal transformation, to produce a map of a similar value, and

said evaluation vectors including components obtained by transforming the edge normal vectors of the corresponding images using an even multiple of an angle between the vectors, all an expression for calculating the similar value, the orthogonal transformation, and the inverse orthogonal transformation having linearity.

**21.** The image communication terminal according to claim 17, wherein

said face extraction part (7) further comprises a face/non-face judgment part for judging whether or not the position and the size which are extracted as the face from the image picked up by said camera part (4) are really a face, and outputs the results of the extraction only when it is judged that they are a face.

**22.** An image communication terminal for transmitting an image of a user photographed by a camera part to the other party, comprising:

an input part (2) accepting input from a user;

a camera part (4) for photographing the user;

a face extraction part (7) for extracting the position and the size of the face (hereinafter referred to as a face region) of the user from an image picked up by said camera part (4);

a display part (3) for displaying the image toward the user;

a communication part (9) for communicating at least the image to an information processor on the side of the other party; and

a transmitting data processing part (8) for outputting to said communication part (9) an image in a rectangular transmission region smaller than a region including the image picked up by said camera part (4) and set so as to be movable in the region including the image, and

an effective region which moves integrally with the transmission region being set in the region including the image picked up by said camera part (4),

said transmitting data processing part (8) moving, when the extracted face region deviates from said effective region, the position where said transmission region is set in conformity with the position of the face region, and setting the value of the exposure level of said camera part (4) such that the visibility of the face in the image picked up by the camera part (4) is improved on the basis of the luminance of the image in the extracted face region.

**23.** The image communication terminal according to claim 22, wherein

said transmitting data processing part (8) also corrects the color tone and outputs the image in the transmission region corrected in color tone to said communication part (9) in addition to the luminance of the image in the transmission region.

**24.** The image communication terminal according to claim 22, wherein

said face extraction part (7) comprises:

an edge extraction part (51) for extracting an edge part (pixels outlining the human body and face) from the image picked up by said camera part (4), and generating an image having only the edge part (hereinafter referred to as an edge image);
a template storage part (52) for storing a template having a plurality of predetermined concentric shapes, which are similar but different in size, provided at its center point;
a voting result storage part (53) for storing the position of coordinates and voting values on said edge image in a one-to-one correspondence for each of the shapes composing said template;
a voting part (54) for sequentially moving the center point of the template to the positions of the pixels in said edge part and increasing or decreasing, for each of the positions of the pixel to which the center point of the template has been moved, the voting value stored in said voting result storage part (53) with respect to each of the positions of coordinates corresponding to the positions of all the pixels forming the shape; and
an analysis part (55) for finding the position and the size of the face included in said target image on the basis of each of the voting values stored in said voting result storage part (53).

25. The image communication terminal according to claim 22, wherein

said face extraction part (7) comprises:

a template image processing part (80) receiving a predetermined template image for finding an edge normal vector of the image, generating an evaluation value from the edge normal vector, and orthogonally transforming the evaluation vector;
an input image processing part (90) receiving the image picked up by said camera part (4) for finding an edge normal vector of the image, generating an evaluation value from the edge normal vector, and orthogonally transforming the evaluation vector;
a sum-of-products part (101) for calculating, with respect to the respective evaluation vectors after the orthogonal transformation which are generated with respect to the template image and the image picked up, the product of corresponding spectral data, and calculating the sum of the calculated products; and
an inverse orthogonal transformation part (102) for subjecting the results of said calculation to inverse orthogonal transformation, to produce a map of a similar value, and

said evaluation vectors including components obtained by transforming the edge normal vectors of the corresponding images using an even multiple of an angle between the vectors, all an expression for calculating the similar value, the orthogonal transformation, and the inverse orthogonal transformation having linearity.

26. The image communication terminal according to claim 22, wherein
said face extraction part (7) further comprises a face/non-face judgment part for judging whether or not the position and the size which are extracted as the face from the image picked up by said camera part (4) are really a face, and outputs the results of the extraction only when it is judged that they are a face.

27. An image communication terminal for transmitting an image of a user photographed by a camera part to the other party, comprising:

a camera part (4) for photographing a user;
a face extraction part (7) for extracting the position of the face of the user from an image picked up by said camera part (4);
a display part (3) for displaying the image received from the other party toward the user;
a notification control part (25) for notifying the user of the position of the face of the user in the image picked up by said camera part (4) on the basis of the extracted position of the face; and
a communication part (9) for communicating at least the image to an information processor on the side of the other party.

28. The image communication terminal according to claim 27, wherein

said face extraction part (7) also extracts the size of the face of the user together with the position of the face, and
said notification control part (25) notifies the user of the position and the size of the face of the user in the image picked up by the camera part (4).

29. The image communication terminal according to claim 27, wherein
said notification control part (25) displays on said display part (3) a mark indicating only the extracted position of the face or the position and the size of the face.

30. The image communication terminal according to claim 29, wherein
said mark is displayed on an image received from the other party.

31. The image communication terminal according to claim 29, wherein
said mark is displayed outside the image received from the other party.

32. The image communication terminal according to claim 29, wherein
said notification control part (25) notifies the user of the extracted position of the face through a position notification part (22) provided separately from said display part (3).

33. The image communication terminal according to claim 27, wherein
a method of notifying the user, which is carried out by said notification control part (25), is made switchable in accordance with an instruction from the user.

34. The image communication terminal according to claim 27, wherein
said face extraction part (7) comprises:

an edge extraction part (51) for extracting an edge part (pixels outlining the human body and face) from the image picked up by said camera part (4), and generating an image having only the edge part (hereinafter referred to as an edge image);
a template storage part (52) for storing a template having a plurality of predetermined concentric shapes, which are similar but different in size, provided at its center point;
a voting result storage part (53) for storing the position of coordinates and voting values on said edge image in a one-to-one correspondence for each of the shapes composing said template;
a voting part (54) for sequentially moving the center point of the template to the positions of the pixels in said edge part and increasing or decreasing, for each of the positions of the pixels to which the center point of the template has been moved, the voting value stored in said voting result storage part (53) with respect to each of the positions of coordinates corresponding to the positions of all the pixels forming the shape; and
an analysis part (55) for finding the position and the size of the face included in said target image on the basis of each of the voting values stored in said voting result storage part (53).

35. The image communication terminal according to claim 27, wherein

said face extraction part (7) comprises:

a template image processing part (80) receiving a predetermined template image for finding an edge normal vector of the image, generating an evaluation value from the edge normal vector, and orthogonally transforming the evaluation vector;
an input image processing part (90) receiving the image picked up by said camera part (4) for finding an edge normal vector of the image, generating an evaluation value from the edge normal vector, and orthogonally transforming the evaluation vector;
a sum-of-products part (101) for calculating, with respect to the respective evaluation vectors after the orthogonal transformation which are generated with respect to the template image and the image picked up, the product of corresponding spectral data, and calculating the sum of the calculated products; and
an inverse orthogonal transformation part (102) for subjecting the results of said calculation to inverse orthogonal transformation, to produce a map of a similar value, and

said evaluation vectors including components obtained by transforming the edge normal vectors of the corresponding images using an even multiple of an angle between value, all an expression for calculating the similar value, the orthogonal transformation, and the inverse orthogonal transformation having linearity.

36. The image communication terminal according to claim 27, wherein

said face extraction part (7) further comprises a face/non-face judgment part for judging whether or not the position and the size which are extracted as the face from the image picked up by said camera part (4) are really a face, and outputs the results of the extraction only when it is judged that they are a face.

F I G. 1

COMMUNICATION PATH

9 COMMUNICATION PART

10 RECEIVED DATA PROCESSING PART

8 TRANSMITTING DATA PROCESSING PART

11 OTHER-PARTY-IMAGE MEMORY

5 DISPLAY CONTROL PART

6 OWN-IMAGE MEMORY

7 FACE EXTRACTION PART

FACE REGION

TRANSMISSION MODE

2 INPUT PART

3 DISPLAY PART

4 CAMERA PART

1

EP 1 158 801 A2

FIG. 2

```
                    START

S201   INPUT TRANSMISSION MODE

S202   PHOTOGRAPH USER

S203   EXTRACT FACE REGION

S204   MATCH TRANSMISSION REGION
       WITH FACE REGION IN
       ACCORDANCE WITH
       TRANSMISSION MODE

S205   SET EFFECTIVE REGION IN
       TRANSMISSION REGION

S206   MONITOR-DISPLAY IMAGE OF
       HIS OR HER OWN IN
       TRANSMISSION REGION AND
       FACE REGION

S207   TRANSMISSION REGION IS LOCKED ?
       No  → S215  ADJUST POSITION OF TRANSMISSION REGION
       Yes ↓

S208   START COMMUNICATION

S209   DISPLAY IMAGE OF OTHER PARTY

S210   PHOTOGRAPH USER

S211   EXTRACT FACE REGION

S212   FACE REGION DEVIATES FROM EFFECTIVE REGION ?
       Yes → S213  MATCH TRANSMISSION REGION WITH FACE REGION IN ACCORDANCE WITH TRANSMISSION MODE
       No ↓

S214   COMMUNICAITON IS TERMINATED ?
       No
       Yes ↓

                    END
```

28

# F I G. 3

# F I G. 4

## F I G. 5

## F I G. 6

FIG. 7

FIG. 8

SCREEN OF DISPLAY PART 3
(a)

(b)

(c)

(d)

FIG. 9

SCREEN OF DISPLAY PART 3
(a)

(b)

(c)

FIG. 10

F I G. 1 1

( a )

ACQUIRED IMAGE

( b )

( c )

( d )

FIG. 12

```
                              ┌──────────────┐ ─52
                              │   TEMPLATE   │
                              │ STORAGE PART │
                              └──────┬───────┘
                                     │
          ┌──────────────┐─51        ▼        ─54            ─55
          │     EDGE     │    ┌──────────────┐    ┌──────────────┐    FACE
TARGET ──▶│  EXTRACTION  │──▶ │    VOTING    │──▶ │   ANALYSIS   │──▶ REGION
IMAGE     │     PART     │    │     PART     │    │     PART     │    (POSITION·
          └──────────────┘    └──────┬───────┘    └──────┬───────┘    SIZE)
                                     │▲                   │
                                     ▼│     ─53           │
                              ┌──────────────┐            │
                              │    VOTING    │            │
                              │    RESULT    │◀───────────┘
                              │ STORAGE PART │
                              └──────────────┘
```

FIG. 13

EP 1 158 801 A2

F I G .  1 4

```
        ┌─────────────────┐
        │  START VOTING   │
        └────────┬────────┘
                 │                    S601
        ┌────────▼────────┐
        │ INITIALIZE VOTING│
        │ STORAGE REGION   │
        └────────┬────────┘
                 │                    S602
        ┌────────▼────────────┐
        │ SET CENTER POINT OF  │
        │ TEMPLATE AT POSITION │
        │ OF HEAD PIXEL IN     │
        │ EDGE PART            │
        └────────┬────────────┘
                 │
        ┌────────▼────────┐          S603
        │     i = 1       │
        └────────┬────────┘
                 │
        ┌────────▼────────────┐      S604
        │ ACQUIRE x-y          │
        │ COORDINATES ON EDGE  │
        │ IMAGE OF ALL PIXELS  │
        │ FORMING CIRCLE ti    │
        └────────┬────────────┘
                 │
        ┌────────▼────────────┐      S605
        │ ADD "1" TO COMPONENT │
        │ REPRESENTING         │
        │ ACQUIRED x-y         │
        │ COORDINATES          │
        └────────┬────────────┘
                 ▼
            S606  PROCESSING OF ALL SHAPES IS TERMINATED?
```

- i ← i + 1 (S607)
- SET CENTER POINT OF TEMPLATE AT POSITION OF SUBSEQUENT PIXEL IN EDGE PART (S609)
- PROCESSING OF ALL SHAPES IS TERMINATED? (S606) — No / Yes
- PROCESSING OF ALL PIXELS IN EDGE PART IS TERMINATED? (S608) — No / Yes
- TERMINATE VOTING

FIG. 14

F I G. 1 5

FIG. 16

VOTING STORAGE REGION
FOR CIRCLE t1

VOTING STORAGE REGION
FOR CIRCLE t2

VOTING STORAGE REGION
FOR CIRCLE tn

# F I G. 1 7

```
                    ┌──────────────────┐
                    │  START ANALYSIS  │
                    └──────────────────┘
                             │
                    ┌──────────────────┐
                    │      j = 1        │─────── S701
                    └──────────────────┘
                             │
                             ▼
                    ┌──────────────────┐
                    │ EXTRACT ONLY      │
                    │ COMPONENT         │
                    │ WHOSE VOTING      │─────── S702
                    │ VALUE IN VOTING   │
                    │ STORAGE REGION    │
                    │ EXCEEDS THRESHOLD │
                    │ G                 │
                    └──────────────────┘
                             │
                    ┌──────────────────┐
                    │    CLUSTERING     │─────── S703
                    └──────────────────┘
                             │
   S710             ┌──────────────────┐
                    │ CALCULATE         │─────── S704
  ┌──────────┐      │ VARIANCE AND      │
  │ j ← j + 1│      │ COVARIANCE VALUES │
  └──────────┘      └──────────────────┘
                             │
                             ▼
                       ╱──────────╲
                      ╱ EACH VALUE  ╲      S705
                     ╱  > THRESHOLD H ╲────── No
                     ╲       ?        ╱
                      ╲──────────────╱
                             │ Yes
                    ┌──────────────────┐
                    │ DETERMINE CENTER  │
                    │ POINT OF CIRCLE tj│─────── S706
                    │ TO BE FACE CENTER │
                    │ AND SIZE THEREOF  │
                    │ TO BE MINOR AXIS  │
                    │ OF FACE           │
                    └──────────────────┘
                             │
                    ┌──────────────────┐
                    │ ESTIMATE LENGTH   │
                    │ OF MAJOR AXIS OF  │─────── S707
                    │ FACE BY           │
                    │ DETERMINING MINOR │
                    │ AXIS OF FACE      │
                    └──────────────────┘
                             │
                    ┌──────────────────┐
                    │ ADD TO ANALYSIS   │─────── S708
                    │ RESULT            │
                    └──────────────────┘
                             │
                             ▼
                       ╱──────────╲
                      ╱ PROCESSING  ╲      S709
               No ───╱ OF ALL SHAPES ╲
                     ╲ IS TERMINATED? ╱
                      ╲──────────────╱
                             │ Yes
                    ┌──────────────────┐
                    │ TERMINATE ANALYSIS│
                    └──────────────────┘
```

# FIG. 18

TEMPLATE IMAGE →

**80**

| | | | |
|---|---|---|---|
| **81** EDGE EXTRACTION PART | **82** EVALUATION VECTOR GENERATION PART | **83** F F T | **84** COMPRESSION PART |

x
y
$\vec{T}$
$\vec{V}$
$\widetilde{V}$

**85** RECORDING PART

**101** ×   $\widetilde{L}$

**102** INVERSE FFT   L   MAP OF SIMILAR VALUE

**103** MAP PROCESSING PART → OUTPUT OF RESULT

TARGET IMAGE →

**90**

| | | | |
|---|---|---|---|
| **91** EDGE EXTRACTION PART | **92** EVALUATION VECTOR GENERATION PART | **93** F F T | **94** COMPRESSION PART |

x
y
$\vec{I}$
$\vec{K}$
$\widetilde{K}$

**7**

EP 1 158 801 A2

39

# FIG. 19

BACKGROUND

OBJECT

TEMPLATE IMAGE

(a)

TARGET IMAGE

(b)

# FIG. 20

I

$\theta$

T

$\theta'$

I'

F I G. 2 1

# FIG. 22

FACE REGION
CANDIDATE
IMAGE →

IMAGE SIZE
NORMALIZATION
PART  /111

→

FEATURE VECTOR
EXTRACTION
PART  /112

→

FACE/NON-FACE
JUDGMENT PART  /113

→ RESULT OF
FACE/NON-FACE
JUDGMENT

FACE/NON-FACE
LEARNING
DICTIONARY  /114

# F I G. 2 3

NON-FACE IMAGE ← | → FACE IMAGE

−1    0    1

124    123    122    121

−3.674887    −1.750879    −1.039976

0.750877